# EUROPÄISCHE PATENTSCHRIFT

(11) **EP 3 529 939 B1**
(45) Veröffentlichungstag und Bekanntmachung des Hinweises auf die Patenterteilung: **02.09.2026**
(21) Anmeldenummer: 17788208.1
(22) Anmeldetag: 23.10.2017
(51) Int. Cl.: H04L 5/00, H04L 7/04, H04L 7/06, H04L 7/10

(54) **OPTIMIERTE KOMBINATION AUS PRÄAMBEL UND DATENFELDERN FÜR SENSORNETZWERKE MIT GERINGEM STROMVERBRAUCH AUF BASIS DES TELEGRAM SPLITTING VERFAHRENS**
OPTIMIZED COMBINATION OF PREAMBLE AND DATA FIELDS FOR SENSOR NETWORKS WITH LOW POWER CONSUMPTION ON THE BASIS OF THE TELEGRAM SPLITTING METHOD
COMBINAISON OPTIMISÉE DE PRÉAMBULES ET DE CHAMPS DE DONNÉES POUR DES RÉSEAUX DE CAPTEURS À FAIBLE CONSOMMATION D'ÉNERGIE SUR LA BASE DU PROCÉDÉ DE SEGMENTATION DE TÉLÉGRAMMES

(30) Priorität: 24.10.2016 DE 102016220883
(43) Veröffentlichungstag der Anmeldung: 28.08.2019
(73) Patentinhaber: Fraunhofer-Gesellschaft zur Förderung der angewandten Forschung e.V., 80686 München (DE)
(72) Erfinder: KILIAN, Gerd, 91058 Erlangen (DE); BERNHARD, Josef, 91058 Erlangen (DE); ERETH, Stefan, 91058 Erlangen (DE); KNEISSL, Jakob, 91058 Erlangen (DE); WECHSLER, Johannes, 91058 Erlangen (DE)
(74) Vertreter: Schlenker, Julian
(86) Internationale Anmeldenummer: PCT/EP2017/077029
(87) Internationale Veröffentlichungsnummer: WO 2018/077814

(56) Entgegenhaltungen:
- EP-A1- 2 763 321
- US-A1- 2014 269 842
- US-B1- 8 175 134

## Beschreibung

Ausführungsbeispiele der vorliegenden Erfindung beziehen sich auf einen Datensender zum Senden von Daten. Weitere Ausführungsbeispiele beziehen sich auf einen Datenempfänger zum Empfangen von Daten. Manche Ausführungsbeispiele beziehen sich auf eine optimierte Kombination aus Präambel und Datenfeldern für Sensornetzwerke mit geringem Stromverbrauch auf Basis des Telegram Splitting Verfahrens.

In der DE100 2011 082 098 B4 ist ein Verfahren für batteriebetriebene Sender beschrieben, bei dem das Datenpaket in Sendepakete unterteilt wird, die kleiner sind als die eigentliche Information, die übertragen werden soll (so genanntes Telegram Splitting (dt. Telegrammaufteilung)). Telegramme werden dabei auf mehrere Teilpakete aufgeteilt. Ein solches Teilpaket wird als Hop (dt. Sprung) bezeichnet. In einem Hop werden mehrere Informationssymbole übertragen. Die Hops werden auf einer Frequenz oder aber über mehrere Frequenzen verteilt, sog. Frequency Hopping (dt. Frequenzsprung), gesendet. Zwischen den Hops gibt es Pausen, in denen nicht gesendet wird.

In einem typischen Sensornetz werden mehrere 100.000 Sensorknoten mit nur einer Basisstation abgedeckt. Da die Sensorknoten über nur sehr kleine Batterien verfügen, ist eine Koordination der Übertragungen in den meisten Fällen kaum möglich. Durch das Telegram Splitting Verfahren wird hierfür eine sehr hohe Übertragungssicherheit erreicht.

In der WO 2015/128385 A1 wird eine Datensendeanordnung beschrieben, die ein Energy-Harvesting-Element als Energiequelle aufweist. Die Datensendeanordnung ist dabei ausgebildet, um Daten unter Verwendung des Telegram Splitting Verfahrens zu senden, wobei ein zum Senden anstehendes Teilpaket in Abhängigkeit von einer von der Energieversorgungseinrichtung bereitstellbaren elektrischen Energiemenge entweder gesendet wird, zwischengespeichert und später gesendet wird, oder verworfen wird.

In der Veröffentlichung [G. Kilian, H. Petkov, R. Psiuk, H. Lieske, F. Beer, J. Robert, and A. Heuberger, "Improved coverage for low-power telemetry systems using telegram splitting," in Proceedings of 2013 European Conference on Smart Objects, Systems and Technologies (SmartSysTech), 2013.] wird eine verbesserte Reichweite für Niedrigenergietelemetriesysteme, die das Telegram Splitting Verfahren verwenden, beschrieben.

In der Veröffentlichung [G. Kilian, M. Breiling, H. H. Petkov, H. Lieske, F. Beer, J. Robert, and A. Heuberger, "Increasing Transmission Reliability for Telemetry Systems Using Telegram Splitting," IEEE Transactions on Communications, vol. 63, no. 3, pp. 949-961, Mar. 2015.] wird eine verbesserte Übertragungssicherheit für Niedrigenergietelemetriesysteme, die das Telegram Splitting Verfahren verwenden, beschrieben.

In der US2016/0094269 A1 wird ein drahtloses Kommunikationssystem mit einer Mehrzahl von Basisstationen und einer Mehrzahl von Endpunkten beschrieben. Das Kommunikationssystem nutzt Telegramme mit einer CSS modulierten Präambel (CSS = Chirp Spread Spectrum, dt. Modulationsverfahren basierend auf dem so genannten Chirp-Impuls) gefolgt von Daten, wobei die Daten mit einer geringen Bandbreite moduliert sind als die Präambel.

In der US 8,175,134 B1 wird eine verminderte Fähigkeit zur Erkennung von Kommunikationssignalen durch einen Gegner durch Anwenden von Frequenzsprung, Frequenz-Chirping und direkter Sequenzspreizung auf die Signale beschrieben. Das Frequenzspringen und das Frequenzzwitschern können durch Pseudozufallsfunktionen gesteuert werden. Die direkte Sequenzspreizung kann eine Pseudozufalls-Chipsequenz verwenden.

In der EP 2 763 321 A1 wird eine Sendevorrichtung beschrieben, die angeordnet ist, um einen Satz digitaler Eingangsdaten in eine Folge von modulierten Chirps zu codieren, wobei die digitalen Eingangsdaten gemäß einem Gray-Code in Codewörter mit mehreren Bits und einem Interleaver codiert werden das verteilt die Bits jedes Codeworts in eine Reihe digitaler Modulationswerte an verschiedenen Bitpositionen und zur Synthese einer Reihe von modulierten Chirps, deren zyklische Verschiebungen durch die Modulationswerte bestimmt werden.

In der US 2014/0269842A1 werden modifizierte Frequenzsprungmuster bereitgestellt, die die Synchronisation einer drahtlosen Verfolgungsvorrichtung mit einem Beacon-Signal ermöglichen, das einen vorbestimmten Bereich (d. H. Beacon-Zaun) definiert. Ein Beacon kann ein Beacon-Signal gemäß einem modifizierten Frequenzsprungmuster senden und eine drahtlose Verfolgungsvorrichtung kann das Beacon-Signal empfangen, indem ein Empfänger gemäß dem Frequenzsprungmuster abgestimmt wird. Das modifizierte Frequenzsprungmuster kann eine Referenzfrequenz enthalten, die bei einem Muster mit hoher Redundanz erzeugt wird, das mit einer pseudozufälligen Folge von Frequenzen gemultiplext ist. Die Pakete des Beacon-Signals, die mit der Referenzfrequenz übertragen werden, können eine Anzeige der nächsten Frequenz gemäß dem modifizierten Frequenzsprungmuster enthalten.

Der vorliegenden Erfindung liegt somit die Aufgabe zugrunde, ein Konzept zu schaffen, welches die Übertragungssicherheit bei der Übertragung von Daten von einem Sensorknoten zu einer Basisstation erhöht ohne auf Seiten der Basisstation eine erhöhte Rechenleistung zur Detektion der Daten zu erfordern

Diese Aufgabe wird durch die unabhängigen Patentansprüche gelöst.

Vorteilhafte Weiterbildungen finden sich in den abhängigen Patentansprüchen.

Ausführungsbeispiele schaffen einen Datensender, der ausgebildet ist, um Daten unter Verwendung eines Frequenzsprungmusters und/oder Zeitsprungmusters zeitlich synchronisiert zu einem Referenzsignal auszusenden; wobei der Datensender ausgebildet ist, um das Referenzsignal selbst auszusenden, wobei das Referenzsignal zumindest zwei Präambeln umfasst, wobei eine erste Präambel der zumindest zwei Präambeln am Stück bei einer Frequenz übertragen wird; wobei der Datensender ausgebildet ist, um die erste Präambel so auszusenden, dass diese empfängerseitig für eine vollständige Detektion geeignet ist; wobei die Daten zumindest zwei Datenpakete umfassen, wobei der Datensender ausgebildet ist, um die zumindest zwei Datenpakete entsprechend des Frequenzsprungmusters und Zeitsprungmusters auszusenden; wobei die Daten ein Telegramm sind, wobei der Datensender ausgebildet ist, um das Telegramm in die zumindest zwei Datenpakete aufzuteilen, wobei jedes der zumindest zwei Datenpakete kürzer ist als das Telegramm; wobei der Datensender ausgebildet ist, um eine zweite Präambel der zumindest zwei Präambeln in zumindest zwei Teilpräambeln aufzuteilen und die zumindest zwei Teilpräambeln zeitlich und/oder frequenzmäßig voneinander beabstandet auszusenden; wobei der Datensender ausgebildet ist, um die zumindest zwei Datenpakete mit den zumindest zwei Teilpräambeln zu versehen; wobei die zumindest zwei Teilpräambeln jeweils kürzer sind als die erste Präambel.

Ausführungsbeispiele schaffen einen Datenempfänger, der ausgebildet ist, um Daten unter Verwendung eines Frequenzsprungmusters und/oder Zeitsprungmusters zeitlich synchronisiert zu einem Referenzsignal zu empfangen oder aus einem Zwischenspeicher zu extrahieren; wobei das Referenzsignal zumindest zwei Präambeln umfasst, wobei eine erste Präambel der zumindest zwei Präambeln am Stück bei einer Frequenz übertragen wird, wobei die Daten zumindest zwei Datenpakete umfassen, wobei der Datenempfänger ausgebildet ist, um die zumindest zwei Datenpakete entsprechend des Frequenzsprungmusters und Zeitsprungmusters zu empfangen oder aus dem Zwischenspeicher zu extrahieren, wobei die Daten ein Telegramm sind, das in die zumindest zwei Datenpakete aufgeteilt ist, wobei jedes der zumindest zwei Datenpakete kürzer ist als das Telegramm; wobei der Datenempfänger ausgebildet ist, um die zumindest zwei Datenpakete zu kombinieren, um das Telegramm zu erhalten; wobei eine zweite Präambel der zumindest zwei Präambeln in zumindest zwei Teilpräambeln aufgeteilt ist und die zumindest zwei Teilpräambeln zeitlich und/oder frequenzmäßig voneinander beabstandet übertragen werden, wobei die zumindest zwei Datenpakete mit den zumindest zwei Teilpräambeln versehen sind, wobei die zumindest zwei Teilpräambeln jeweils kürzer sind als die erste Präambel.

Der vorliegenden Erfindung liegt die Idee zugrunde, Daten unter Verwendung eines Frequenzsprungmusters und/oder Zeitsprungmusters zeitlich synchronisiert zu einem Referenzsignal zu übertragen. Durch die Verwendung des Frequenzsprungmusters und/oder Zeitsprungmusters kann eine Übertragungssicherheit erhöht werden, da die Wahrscheinlichkeit, dass alle Sendefrequenzen bzw. alle Sendezeiten, die durch das Frequenzsprungmuster bzw. Zeitsprungmuster vorgegeben werden, durch einen Störer gestört werden, geringer ist, als dass nur eine Sendefrequenz bzw. nur eine Sendezeit durch den Störer gestört wird. Zudem kann eine für die Detektion der Daten erforderliche Rechenleistung auf Seiten des Datenempfängers reduziert werden, da die Daten zeitlich synchronisiert zu dem Referenzsignal ausgesendet werden, welches von dem Datensender selbst ausgesendet wird.

Weitere Ausführungsbeispiele schaffen ein Verfahren zum Senden von Daten. Das Verfahren umfasst einen Schritt des Sendens von Daten unter Verwendung eines Frequenzsprungmusters und/oder Zeitsprungmusters zeitlich synchronisiert zu einem Referenzsignal; wobei das Referenzsignal zumindest zwei Präambeln umfasst, wobei eine erste Präambel der zumindest zwei Präambeln am Stück bei einer Frequenz übertragen wird; wobei die erste Präambel so ausgesendet wird, dass diese empfängerseitig für eine vollständige Detektion geeignet ist; wobei die Daten zumindest zwei Datenpakete umfassen, wobei bei dem Senden die zumindest zwei Datenpakete entsprechend des Frequenzsprungmusters und/oder Zeitsprungmusters ausgesendet werden; wobei die Daten ein Telegramm sind, wobei das Telegramm auf die zumindest zwei Datenpakete aufgeteilt ist, wobei jedes der zumindest zwei Datenpakete kürzer ist als das Telegramm; wobei die zweite Präambel der zumindest zwei Präambeln in zumindest zwei Teilpräambeln aufgeteilt und die zumindest zwei Teilpräambeln zeitlich und/oder frequenzmäßig voneinander beabstandet ausgesendet werden; wobei die zumindest zwei Datenpakete mit den zumindest zwei Teilpräambeln versehen sind, wobei die zumindest zwei Teilpräambeln jeweils kürzer sind als die erste Präambel.

Weitere Ausführungsbeispiele schaffen ein Verfahren zum Empfangen von Daten. Das Verfahren umfasst einen Schritt des Empfangens von Daten unter Verwendung eines Frequenzsprungmusters und/oder Zeitsprungmusters zeitlich synchronisiert zu einem Referenzsignal; wobei das Referenzsignal zumindest zwei Präambeln umfasst, wobei eine erste Präambel der zumindest zwei Präambeln am Stück bei einer Frequenz übertragen wird; wobei die Daten zumindest zwei Datenpakete umfassen, wobei bei dem Empfangen die zumindest zwei Datenpakete entsprechend des Frequenzsprungmusters und/oder Zeitsprungmusters empfangen oder aus dem Zwischenspeicher extrahiert werden, wobei die Daten ein Telegramm sind, das in die zumindest zwei Datenpakete aufgeteilt ist, wobei jedes der zumindest zwei Datenpakete kürzer ist als das Telegramm; Kombinieren der zumindest zwei Datenpakete, um das Telegramm zu erhalten; wobei eine zweite Präambel der zumindest zwei Präambeln in zumindest zwei Teilpräambeln aufgeteilt ist und die zumindest zwei Teilpräambeln zeitlich und/oder frequenzmäßig voneinander beabstandet übertragen werden, wobei die zumindest zwei Datenpakete mit den zumindest zwei Teilpräambeln versehen sind, wobei die zumindest zwei Teilpräambeln jeweils kürzer sind als die erste Präambel.

Weitere Ausführungsbeispiele schaffen ein Übertragungsverfahren zur drahtlosen Übertragung von Daten in einem Kommunikationssystem (z.B. einem Sensornetzwerk oder Telemetriesystem). Das Verfahren umfasst einen Schritt des Übertragens der Daten unter Verwendung eines Frequenzsprungmusters und/oder Zeitsprungmusters zeitlich synchronisiert zu einem Referenzsignal.

Im Folgenden werden bevorzugte Ausführungsbeispiele des Datensenders beschrieben.

Bei Ausführungsbeispielen ist der Datensender ausgebildet sein, um die Daten unter Verwendung des Frequenzsprungmusters und/oder des Zeitsprungmusters zeitsynchronisiert zu dem Referenzsignal auszusenden.

Bei Ausführungsbeispielen kann der Datensender ausgebildet sein, um die Daten unter Verwendung des Frequenzsprungmusters und/oder des Zeitsprungmusters frequenzsynchronisiert zu dem Referenzsignal auszusenden.

Beispielsweise kann der Datensender ausgebildet sein, um einen Sendezeitpunkt oder Sendezeitpunkte zum Senden der Daten zeitlich an einen Zeitpunkt des Referenzsignals anzupassen, so dass das Referenzsignal und das Senden der Daten zeitsynchronisiert ist.

Ferner kann der Datensender ausgebildet sein, um eine Sendefrequenz bzw. Sendefrequenzen zum Senden der Daten an eine Frequenz des Referenzsignals anzupassen, so dass das Referenzsignal und das Senden der Daten frequenzsynchronisiert ist.

Bei Ausführungsbeispielen kann das Frequenzsprungmuster eine Abfolge von Sendefrequenzen oder Sendefrequenzsprüngen angeben, mit denen die Daten zu senden sind.

Beispielsweise kann ein erster Teil der Daten mit einer ersten Sendefrequenz (oder in einem ersten Frequenzkanal) und ein zweiter Teil der Daten mit einer zweiten Sendefrequenz (oder in einem zweiten Frequenzkanal) gesendet werden, wobei die erste Sendefrequenz und die zweite Sendefrequenz unterschiedlich sind. Das Frequenzsprungmuster kann dabei die erste Sendefrequenz und die zweite Sendefrequenz definieren (oder vorgeben, oder angeben). Alternativ kann das Frequenzsprungmuster die erste Sendefrequenz und einen Frequenzabstand (Sendefrequenzsprung) zwischen der ersten Sendefrequenz und der zweiten Sendefrequenz angeben. Natürlich kann das Frequenzsprungmuster auch nur den Frequenzabstand (Sendefrequenzsprung) zwischen der ersten Sendefrequenz und der zweiten Sendefrequenz angeben.

Bei Ausführungsbeispielen kann das Zeitsprungmuster eine Abfolge von Sendezeitpunkten oder Sendezeitabständen angeben, mit denen die Daten zu senden sind.

Beispielsweise kann ein erster Teil der Daten zu einem ersten Sendezeitpunkt (oder in einem ersten Sendezeitschlitz) und ein zweiter Teil der Daten zu einem zweiten Sendezeitpunkt (oder in einem zweiten Sendezeitschlitz) gesendet werden, wobei der erste Sendezeitpunkt und der zweite Sendezeitpunkt unterschiedlich sind. Das Zeitsprungmuster kann dabei den ersten Sendezeitpunkt und den zweiten Sendezeitpunkt definieren (oder vorgeben, oder angeben). Alternativ kann das Zeitsprungmuster den ersten Sendezeitpunkt und einen zeitlichen Abstand zwischen dem ersten Sendezeitpunkt und dem zweiten Sendezeitpunkt angeben. Natürlich kann das Zeitsprungmuster auch nur den zeitlichen Abstand zwischen dem ersten Zeitpunkt und dem zweiten Sendezeitpunkt angeben.

Bei Ausführungsbeispielen kann der Datensender ausgebildet sein, um die Daten zusammen mit zumindest einer Synchronisationssequenz unter Verwendung des Frequenzsprungmusters und/oder Zeitsprungmusters zu senden.

Bei Ausführungsbeispielen umfassen die Daten zumindest zwei Datenpakete, wobei der Datensender ausgebildet ist, um die zumindest zwei Datenpakete entsprechend des Frequenzsprungmusters und/oder Zeitsprungmusters auszusenden.

Beispielsweise können die zumindest zwei Datenpakete jeweils eine unterschiedlichen oder sich überlappenden Teil der Daten enthalten, so dass die Daten nicht am Stück, sondern aufgeteilt auf die Datenpakete übertragen werden.

Die Daten sind hierbei ein Telegramm, wobei der Datensender ausgebildet ist, um das Telegramm in die zumindest zwei Datenpakete aufzuteilen, wobei jedes der zumindest zwei Datenpakete kürzer ist als das Telegramm.

Der Datensender kann ausgebildet sein, um zumindest einen Teil der Datenpakete mit Synchronisationssequenzen oder Teilsynchronisationssequenzen zu versehen. Ein Teil der Datenpakete kann demensprechend nur Daten enthalten. Ein Teil der Datenpakete kann sowohl Daten als auch eine Synchronisationssequenz bzw. Teilsynchronisationssequenz enthalten. Ein Teil der Datenpakete kann nur eine Synchronisationssequenz bzw. Teilsynchronisationssequenz enthalten.

Bei Ausführungsbeispielen ist der Datensender ausgebildet sein, um das Referenzsignal selbst auszusenden, wobei das Referenzsignal eine Präambel ist. Der Datensender kann dabei ausgebildet sein, um die Präambel so auszusenden, dass diese empfängerseitig für eine vollständige Detektion geeignet ist.

Beispielsweise kann der Datensender ausgebildet sein, um die Präambel so auszusenden, dass diese für sich alleine in einem Datenempfänger detektiert werden kann. Wenn der korrekte Zeitpunkt der Präambel empfängerseitig detektiert wird, dann können die Daten ohne weitere Detektion dekodiert werden.

Bei Ausführungsbeispielen kann der Datensender ausgebildet sein, um die Präambel am Stück auszusenden, d.h. ohne Unterbrechung oder Sendepause. Der Datensender kann dabei ausgebildet sein, um die Präambel vor den Daten, nach den Daten oder zwischen den Daten so auszusenden, dass die Aussendung der Präambel nicht von der Aussendung der Daten überlagert wird.

Beispielsweise kann der Datensender ausgebildet sein, um die Daten und die Präambel zu unterschiedlichen Sendezeiten und/oder auf unterschiedlichen Sendefrequenzen auszusenden, so dass die Aussendung der Präambel nicht von der Aussendung der Daten überlagert wird.

Der Datensender kann ausgebildet sein, um die Präambel mit einer geringeren Datenrate auszusenden als die Daten. Hierdurch ist es möglich, die Präambel empfängerseitig auch bei einem geringen Signal- zu Rauschverhältnis zu detektieren.

Der Datensender kann ausgebildet sein, um die Präambel mit einer anderen Modulationsart oder einem anderen Modulationsverfahren auszusenden als die Daten.

Beispielsweise kann der Datensender ausgebildet sein, um die Präambel BPSK (BPSK = Binary Phase-Shift Keying, dt. binäre Phasenumtastung), OFDM (OFDM = Orthogonal Frequency-Division Multiplexing, dt. Orthogonales Frequenzmultiplexverfahren) oder CSS (CSS = Chirp Spread Spectrum dt. Zirpenfrequenzspreizung) moduliert auszusenden, und um die Daten UNB (UNB = ultra narrow-band, dt. ultra schmalband) moduliert auszusenden.

Der Datensender ist ausgebildet, um die Daten unter Verwendung des Telegramm Splitting Verfahrens auszusenden. Dabei sind die Daten ein Telegramm, wobei der Datensender ausgebildet ist, um das Telegramm in eine Mehrzahl von Datenpaketen (oder Datensubpakete oder Teildatenpakete) aufzuteilen, wobei jedes der Mehrzahl von Datenpaketen kürzer ist als das Telegramm. Die Mehrzahl von Datenpaketen werden dabei unter Verwendung des Frequenzsprungmusters und/oder Zeitsprungmusters ausgesendet. Beispielsweise ist jedem der Mehrzahl von Datenpaketen durch das Frequenzsprungmuster und/oder Zeitsprungmuster eine Sendefrequenz (oder ein Sendefrequenzsprung bezogen auf ein vorheriges Datenpaket) und/oder ein Sendezeitpunkt (oder Sendezeitintervall, oder Sendezeitschlitz, Sendezeitsprung bezogen auf ein vorheriges Datenpaket) zugeordnet. Ferner können die Mehrzahl von Datenpaketen mit einem zeitlichen Abstand ausgesendet werden, so dass zwischen den Datenpaketen Sendepausen vorhanden sind.

Der Datensender kann ausgebildet sein, um weitere Daten zusammen mit der Präambel am Stück zu übertragen. Die weiteren Daten können der Präambel angehängt oder vorangestellt werden. Natürlich ist es auch möglich, dass ein Teil der Präambel vor den weiteren Daten übertragen wird und ein anderer Teil der Präambel nach den weiteren Daten.

Zumindest ein Teil der weiteren Daten, die mit der Präambel übertragen werden, können Informationen bezüglich des Frequenzsprungmusters und/oder Zeitsprungmusters, mit denen die Daten übertragen werden, enthalten.

Bei Ausführungsbeispielen umfasst das Referenzsignal zumindest zwei Präambeln.

Der Datensender kann dabei ausgebildet sein, um die zumindest zwei Präambeln mit unterschiedlichen Modulationsarten oder Modulationsverfahren auszusenden. Ferner kann der Datensender ausgebildet sein, um die zumindest zwei Präambeln mit unterschiedlichen Datenraten auszusenden. Ferner kann der Datensender ausgebildet sein, um die zumindest zwei Präambeln auf unterschiedlichen Sendefrequenzen auszusenden.

Der Datensender kann dabei ausgebildet sein, um die zumindest zwei Präambeln so auszusenden, dass die zumindest zwei Präambeln empfängerseitig jeweils für eine vollständige Detektion geeignet sind.

Beispielsweise kann der Datensender ausgebildet sein, um die zumindest zwei Präambeln so auszusenden, dass jede Präambel empfängerseitig für sich selbst detektierbar ist, so dass zur Bestimmung des korrekten Referenzzeitpunktes weiterhin nur eine Präambel notwendig ist. Die beiden Präambeln können auf verschiedenen Frequenzen gesendet werden.

Zum Beispiel kann der Datensender ausgebildet sein, um die gleiche Präambel mehrmals (zumindest zwei Mal) auszusenden.

Der Datensender kann ausgebildet sein, um die zumindest zwei Präambeln so auszusenden, dass eine erste Präambel der zumindest zwei Präambeln empfängerseitig nur für eine grobe Detektion geeignet ist, und dass eine zweite Präambel der zumindest zwei Präambeln empfängerseitig für eine vollständige Detektion geeignet ist.

Beispielsweise kann der Datensender ausgebildet sein, die erste Präambel so auszusenden, dass die erste Präambel empfängerseitig in einem Empfangsdatenstrom leicht detektierbar ist. Die Detektion der ersten Präambel liefert empfängerseitig eine nur geringe zeitliche Genauigkeit, die jedoch ausreicht um die zweite Präambel in dem Empfangsdatenstrom zu lokalisieren, basierend auf der dann die eigentliche Detektion oder Synchronisation durchgeführt wird.

Der Datensender kann ferner ausgebildet sein, um weitere Daten zusammen mit einer ersten Präambel der zumindest zwei Präambeln am Stück auszusenden, wobei die weiteren Daten, die zusammen mit der ersten Präambel am Stück ausgesendet werden, Informationen bezüglich einer zweiten Präambel der zumindest zwei Präambeln enthalten können. Mit der in den weiteren Daten enthaltenen Information kann beispielsweise ein zeitlicher Abstand oder Frequenzabstand zwischen den zumindest zwei Präambeln signalisiert werden.

Der Datensender ist ferner ausgebildet, um eine der zumindest zwei Präambeln in zumindest zwei Teilpräambeln aufzuteilen und die zumindest zwei Teilpräambeln zeitlich und/oder frequenzmäßig voneinander beabstandet auszusenden.

Bei Ausführungsbeispielen kann der Datensender ausgebildet sein, um das Referenzsignal selbst auszusenden, wobei das Referenzsignal ein zeitlich deterministisch wiederholtes Signal (z.B. Beacon) ist.

Beispielsweise kann der Datensender eine Basisstation sein, die einen Beacon aussendet. Mit einem bekannten Abstand sendet die Basisstation dann Daten an bestimmte Sensorknoten aus.

Der Datensender kann ausgebildet sein, um das Referenzsignal vor den Daten, nach den Daten oder zwischen den Daten so auszusenden, dass die Aussendung des Referenzsignals nicht von der Aussendung der Daten überlagert wird.

Der Datensender kann ausgebildet sein, um das Referenzsignal mit einer anderen Datenrate auszusenden als die Daten. Der Datensender kann ausgebildet sein, um das Referenzsignal mit einer anderen Modulationsart oder einem anderen Modulationsverfahren auszusenden als die Daten.

Der Datensender kann ausgebildet sein, um weitere Daten zusammen mit dem Referenzsignal am Stück zu übertragen. Zumindest ein Teil der weiteren Daten, die mit dem Referenzsignal zusammen am Stück übertragen werden, können Informationen bezüglich des Frequenzsprungmusters und/oder Zeitsprungmusters, mit denen die Daten übertragen werden, enthalten.

Bei Ausführungsbeispielen kann der Datensender einen Empfänger umfassen, der ausgebildet ist, um das Referenzsignal von einem anderen Datensender zu empfangen. Das Referenzsignal kann ein zeitlich deterministisch wiederholtes Signal (z.B. Beacon) sein.

Beispielsweise kann der Datensender ein Sensorknoten sein, der den Beacon einer Basisstation empfängt und ansprechend auf den Empfang des Beacon die Daten zeitlich synchronisiert zu dem Beacon aussendet.

Im Folgenden werden bevorzugte Ausführungsbeispiele des Datenempfängers beschrieben.

Bei Ausführungsbeispielen ist der Datenempfänger ausgebildet, um die Daten unter Verwendung des Frequenzsprungmusters und/oder Zeitsprungmusters zeitsynchronisiert zu dem Referenzsignal zu empfangen oder aus dem Zwischenspeicher zu extrahieren.

Bei Ausführungsbeispielen kann der Datenempfänger ausgebildet sein, um die Daten unter Verwendung des Frequenzsprungmusters und/oder Zeitsprungmusters zeitsynchronisiert und frequenzsynchronisiert zu dem Referenzsignal zu empfangen oder aus dem Zwischenspeicher zu extrahieren.

Beispielsweise kann der Datenempfänger ausgebildet sein, um einen Empfangszeitpunkt oder Empfangszeitpunkte zum Empfangen der Daten zeitlich an einen Zeitpunkt des Referenzsignals anzupassen, so dass das Referenzsignal und das Empfangen der Daten zeitsynchronisiert ist.

Ferner kann der Datenempfänger ausgebildet sein, um eine Empfangsfrequenz bzw. Empfangsfrequenzen zum Empfangen der Daten an eine Frequenz des Referenzsignals anzupassen, so dass das Referenzsignal und das Empfangen der Daten frequenzsynchronisiert ist.

Bei Ausführungsbeispielen kann das Frequenzsprungmuster eine Abfolge von Empfangsfrequenzen oder Empfangsfrequenzsprüngen angeben, mit denen die Daten zu empfangen sind.

Beispielsweise kann ein erster Teil der Daten mit einer ersten Empfangsfrequenz (oder in einem ersten Frequenzkanal) und ein zweiter Teil der Daten mit einer zweiten Empfangsfrequenz (oder in einem zweiten Frequenzkanal) empfangen werden, wobei die erste Empfangsfrequenz und die zweite Empfangsfrequenz unterschiedlich sind. Das Frequenzsprungmuster kann dabei die erste Empfangsfrequenz und die zweite Empfangsfrequenz definieren (oder vorgeben, oder angeben). Alternativ kann das Frequenzsprungmuster die erste Empfangsfrequenz und einen Frequenzabstand (Empfangsfrequenzsprung) zwischen der ersten Empfangsfrequenz und der zweiten Empfangsfrequenz angeben. Natürlich kann das Frequenzsprungmuster auch nur den Frequenzabstand (Empfangsfrequenzsprung) zwischen der ersten Empfangsfrequenz und der zweiten Empfangsfrequenz angeben.

Bei Ausführungsbeispielen kann das Zeitsprungmuster eine Abfolge von Empfangszeitpunkten oder Empfangszeitabständen angeben, mit denen die Daten zu empfangen sind.

Beispielsweise kann ein erster Teil der Daten zu einem ersten Empfangszeitpunkt (oder in einem ersten Empfangszeitschlitz) und ein zweiter Teil der Daten zu einem zweiten Empfangszeitpunkt (oder in einem zweiten Empfangszeitschlitz) empfangen werden, wobei der erste Empfangszeitpunkt und der zweite Empfangszeitpunkt unterschiedlich sind. Das Zeitsprungmuster kann dabei den ersten Empfangszeitpunkt und den zweiten Empfangszeitpunkt definieren (oder vorgeben, oder angeben). Alternativ kann das Zeitsprungmuster den ersten Empfangszeitpunkt und einen zeitlichen Abstand zwischen dem ersten Empfangszeitpunkt und dem zweiten Empfangszeitpunkt angeben. Natürlich kann das Zeitsprungmuster auch nur den zeitlichen Abstand zwischen dem ersten Empfangszeitpunkt und dem zweiten Empfangszeitpunkt angeben.

Bei Ausführungsbeispielen umfassen die Daten zumindest zwei Datenpakete, wobei der Datenempfänger ausgebildet ist, um die zumindest zwei Datenpakete entsprechend des Frequenzsprungmusters und/oder Zeitsprungmusters zu empfangen oder aus dem Zwischenspeicher zu extrahieren.

Die Daten sind ein Telegramm, das in die zumindest zwei Datenpakete aufgeteilt ist, wobei jedes der zumindest zwei Datenpakete kürzer ist als das Telegramm. Der Datenempfänger ist dabei ausgebildet, um die zumindest zwei Datenpakete zu kombinieren, um das Telegramm zu erhalten.

Bei Ausführungsbeispielen kann das Referenzsignal eine Präambel sein.

Der Datenempfänger kann dabei ausgebildet sein, um die Präambel am Stück zu empfangen oder aus dem Zwischenspeicher zu extrahieren.

Ferner kann der Datenempfänger ausgebildet sein, um die Präambel zusammen mit weiteren Daten am Stück zu empfangen oder aus dem Zwischenspeicher zu extrahieren. Die weiteren Daten, die zusammen mit der Präambel am Stück empfangen oder aus dem Zwischenspeicher extrahiert werden, können Informationen bezüglich des Frequenzsprungmusters und/oder Zeitsprungmusters enthalten, wobei der Datenempfänger ausgebildet sein kann, um die Daten unter Verwendung der Information bezüglich des Frequenzsprungmusters und/oder Zeitsprungmusters zu empfangen oder aus dem Zwischenspeicher zu extrahieren.

Bei Ausführungsbeispielen umfasst das Referenzsignal zwei Präambeln.

Eine erste Präambel der zumindest zwei Präambeln kann für eine grobe Detektion geeignet sein, während eine zweite Präambel der zumindest zwei Präambeln für eine vollständige Detektion geeignet sein kann. Der Datenempfänger kann dabei ausgebildet sein, um eine grobe Detektion unter Verwendung der ersten Präambel durchzuführen, und um eine vollständige Detektion unter Verwendung der zweiten Präambel durchzuführen.

Der Datenempfänger kann ausgebildet sein, um weitere Daten zusammen mit einer ersten Präambel der zumindest zwei Präambeln zu empfangen oder aus dem Zwischenspeicher zu extrahieren. Die weiteren Daten können eine Information bezüglich einer zweiten Präambel der zwei Präambeln umfassen, wobei der Datenempfänger ausgebildet sein kann, um die zweite Präambel unter Verwendung der Informationen bezüglich der zweiten Präambel in einem Empfangsdatenstrom zu detektieren. Beispielsweise kann mit der Information, die in den weiteren Daten enthalten ist, ein zeitlicher Abstand oder Frequenzabstand zwischen den zwei Präambeln signalisiert werden, wobei der Datenempfänger ausgebildet sein kann, um die zweite Präambel unter Verwendung des signalisierten zeitlichen Abstands oder Frequenzabstands zu detektieren.

Die zwei Präambeln können jeweils für eine vollständige Detektion geeignet sein. Der Datenempfänger kann dabei ausgebildet sein, um, im Falle einer erfolgreichen vollständigen Detektion einer der zwei Präambeln, die Daten sofort zu empfangen ohne eine Detektion einer weiteren der zwei Präambeln durchzuführen. Ferner kann der Datenempfänger ausgebildet sein, um, im Falle einer nicht erfolgreichen vollständigen Detektion einer der zwei Präambeln, eine Detektion der weiteren der zwei Präambeln durchzuführen. Ferner kann der Datenempfänger ausgebildet sein, um, im Falle einer nicht erfolgreichen vollständigen Detektion der zwei Präambeln, die zwei Präambeln zu kombinieren, um eine Detektion durchzuführen.

Bei Ausführungsbeispielen kann der Datenempfänger ausgebildet sein, um das Referenzsignal selbst auszusenden. Das Referenzsignal kann ein zeitlich deterministisch wiederholtes Signal (z.B. Beacon) sein.

Beispielsweise kann der Datenempfänger eine Basisstation sein, die ausgebildet ist, um ein Beacon auszusenden, und um Daten zu empfangen, die von einem Sensorknoten ansprechend auf das Beacon zeitlich synchronisiert zu dem Beacon ausgesendet werden.

Ausführungsbeispiele der vorliegenden Erfindung werden bezugnehmend auf die beiliegenden Figuren näher erläutert. Es zeigen:
- Fig. 1: ein schematisches Blockschaltbild eines Systems mit einem Datensender und einem Datenempfänger, gemäß einem Ausführungsbeispiel der vorliegenden Erfindung;
- Fig. 2: in einem Diagramm eine Anordnung des Referenzsignals relativ zu den Daten, die mittels eines Frequenz- und Zeitsprungmusters übertragen werden, wobei das Referenzsignal zeitlich vor den Daten 120 angeordnet ist;
- Fig. 3: in einem Diagramm eine Anordnung des Referenzsignals relativ zu den Daten, die mittels eines Frequenz- und Zeitsprungmusters übertragen werden, wobei das Referenzsignal zeitlich zwischen den Daten so angeordnet ist, dass eine Übertragung des Referenzsignals nicht von einer Übertragung der Daten überlagert wird;
- Fig. 4: in einem Diagramm eine Anordnung des Referenzsignals relativ zu den Daten, die mittels eines Frequenz- und Zeitsprungmusters übertragen werden, wobei das Referenzsignal zeitlich vor den Daten angeordnet ist, wobei das Referenzsignal mit einer niedrigeren Datenrate übertragen wird als die Daten;
- Fig. 5: in einem Diagramm eine Anordnung des Referenzsignals relativ zu den Daten, die mittels eines Frequenz- und Zeitsprungmusters übertragen werden, wobei das Referenzsignal zeitlich vor den Daten angeordnet ist, und wobei das Referenzsignal in der Frequenz gespreizt ist.
- Fig. 6: in einem Diagramm eine Anordnung von drei Referenzsignalen relativ zu den Daten, die mittels eines Frequenz- und Zeitsprungmusters übertragen werden, wobei die Referenzsignale zeitlich zwischen den Daten so angeordnet sind, dass die Aussendung der Referenzsignale nicht von der Aussendung der Daten überlagert wird;
- Fig. 7: in einem Diagramm eine Anordnung von drei Referenzsignalen relativ zu den Daten, die mittels eines Frequenz- und Zeitsprungmusters übertragen werden, wobei die Referenzsignale zeitlich zwischen den Daten so angeordnet sind, dass die Aussendung der Referenzsignale nicht von der Aussendung der Daten überlagert wird, und wobei die Referenzsignale einen fest definierten Zeitabstand und Frequenzabstand zueinander aufweisen;
- Fig. 8: in einem Diagramm eine Anordnung eines Referenzsignals relativ zu den Daten, die mittels eines Frequenz- und Zeitsprungmusters übertragen werden, wobei das Referenzsignal zeitlich vor den Daten angeordnet ist, wobei die Datenpakete mit zusätzlichen Synchronisationssequenzen versehen sind;
- Fig. 9: in einem Diagramm sich wiederholende Anordnungen von Referenzsignalen und Daten, die mittels Frequenz- und Zeitsprungmustern übertragen werden, wobei das Referenzsignal jeweils zeitlich vor den Daten angeordnet ist;
- Fig. 10: in einem Diagramm eine Anordnung des Referenzsignals relativ zu den Daten, die mittels eines Frequenz- und Zeitsprungmusters übertragen werden, wobei das Referenzsignal zeitlich vor den Daten angeordnet ist, und wobei weitere Daten zusammen dem Referenzsignal übertragen werden;
- Fig. 11: in einem Diagramm eine Anordnung des Referenzsignals relativ zu den Daten, die mittels eines Frequenz- und Zeitsprungmusters übertragen werden, wobei das Referenzsignal zeitlich vor den Daten angeordnet ist, und wobei weitere Daten zusammen dem Referenzsignal übertragen werden, wobei die weiteren Daten eine Information z. B. über das Frequenz- und Zeitsprungmuster oder die Länge enthalten;
- Fig. 12: in einem Diagramm eine Anordnung von drei Referenzsignalen relativ zu den Daten, die mittels eines Frequenz- und Zeitsprungmusters übertragen werden, wobei die Referenzsignale zeitlich zwischen den Daten so angeordnet sind, dass die Aussendung der Referenzsignale nicht von der Aussendung der Daten überlagert wird, wobei die Referenzsignale jeweils zusammen mit weiteren Daten übertragen werden;
- Fig. 13: ein Flussdiagramm eines Verfahrens zum Senden von Daten, gemäß einem Ausführungsbeispiel; und
- Fig. 14: ein Flussdiagramm eines Verfahrens zum Empfangen von Daten, gemäß einem Ausführungsbeispiel.

In der nachfolgenden Beschreibung der Ausführungsbeispiele der vorliegenden Erfindung werden in den Figuren gleiche oder gleichwirkende Elemente mit dem gleichen Bezugszeichen versehen, so dass deren Beschreibungen in den unterschiedlichen Ausführungsbeispielen untereinander austauschbar ist.

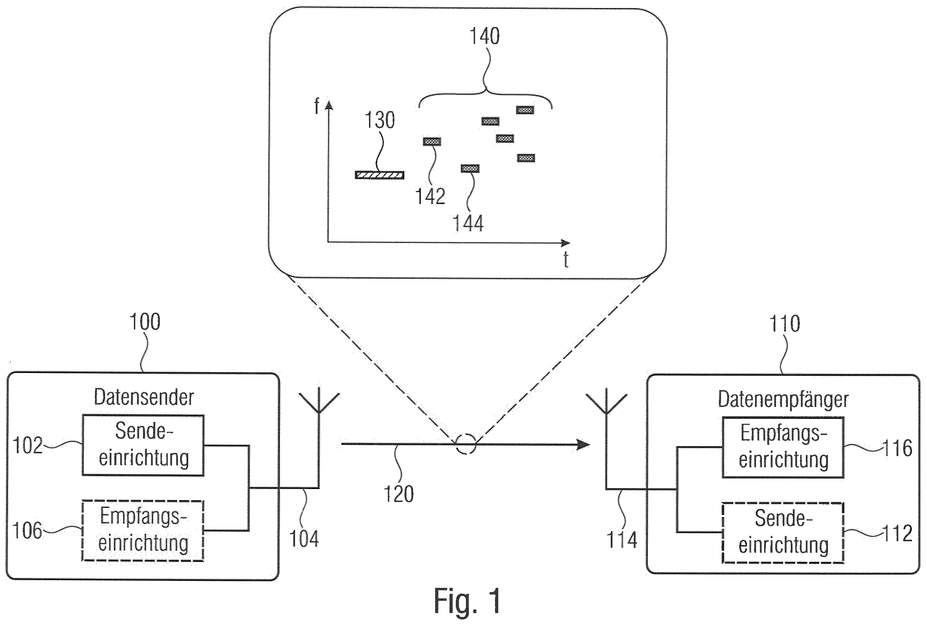

Fig. 1 zeigt ein schematisches Blockschaltbild eines Systems mit einem Datensender 100 und einem Datenempfänger 110, gemäß einem Ausführungsbeispiel der vorliegenden Erfindung. Das System nutzt ein Frequenzsprungmuster und/oder Zeitsprungmuster zur Übertragung von Daten 120 von dem Datensender 100 zu dem Datenempfänger 110.

Bei Ausführungsbeispielen ist der Datensender 100 ausgebildet, um die Daten 120 unter Verwendung des Frequenzsprungmusters und/oder Zeitsprungmusters zeitlich synchronisiert zu einem Referenzsignal 130 auszusenden.

Bei Ausführungsbeispielen ist der Datenempfänger 110 ausgebildet, um die Daten 120 unter Verwendung des Frequenzsprungmusters und/oder Zeitsprungmusters zeitlich synchronisiert zu dem Referenzsignal 130 zu empfangen.

In Fig. 1 wird beispielshaft davon ausgegangen, dass die Daten unter Verwendung eines Frequenz- und Zeitsprungmusters (d.h. eine Kombination aus einem Frequenzsprungmuster und einem Zeitsprungmuster) 140 übertragen werden. Natürlich können die Daten 120 auch nur unter Verwendung eines Frequenzsprungmusters oder eines Zeitsprungmusters übertragen werden.

Ein Frequenzsprungmuster kann eine Abfolge von Sendefrequenzen oder Sendefrequenzsprüngen sein mit denen der Datensender 100 die Daten sendet.

Beispielsweise kann ein erster Teil der Daten mit einer ersten Sendefrequenz (oder in einem ersten Frequenzkanal) und ein zweiter Teil der Daten mit einer zweiten Sendefrequenz (oder in einem zweiten Frequenzkanal) gesendet werden, wobei die erste Sendefrequenz und die zweite Sendefrequenz unterschiedlich sind. Das Frequenzsprungmuster kann dabei die erste Sendefrequenz und die zweite Sendefrequenz definieren (oder vorgeben, oder angeben). Alternativ kann das Frequenzsprungmuster die erste Sendefrequenz und einen Frequenzabstand (Sendefrequenzsprung) zwischen der ersten Sendefrequenz und der zweiten Sendefrequenz angeben. Natürlich kann das Frequenzsprungmuster auch nur den Frequenzabstand (Sendefrequenzsprung) zwischen der ersten Sendefrequenz und der zweiten Sendefrequenz angeben.

Ein Zeitsprungmuster kann eine Abfolge von Sendezeitpunkten oder Sendezeitabständen sein mit denen der Datensender 100 die Daten sendet.

Beispielsweise kann ein erster Teil der Daten zu einem ersten Sendezeitpunkt (oder in einem ersten Sendezeitschlitz) und ein zweiter Teil der Daten zu einem zweiten Sendezeitpunkt (oder in einem zweiten Sendezeitschlitz) gesendet werden, wobei der erste Sendezeitpunkt und der zweite Sendezeitpunkt unterschiedlich sind. Das Zeitsprungmuster kann dabei den ersten Sendezeitpunkt und den zweiten Sendezeitpunkt definieren (oder vorgeben, oder angeben). Alternativ kann das Zeitsprungmuster den ersten Sendezeitpunkt und einen zeitlichen Abstand zwischen dem ersten Sendezeitpunkt und dem zweiten Sendezeitpunkt angeben. Natürlich kann das Zeitsprungmuster auch nur den zeitlichen Abstand zwischen dem ersten Zeitpunkt und dem zweiten Sendezeitpunkt angeben.

Wie bereits erwähnt ist der Datensender 100 ausgebildet, um die Daten unter Verwendung des Frequenzsprungmusters und/oder Zeitsprungmusters zeitlich synchronisiert zu dem Referenzsignal auszusenden.

Der Datensender 100 kann also ausgebildet sein, um das Senden der Daten unter Verwendung des Frequenzsprungmusters und/oder Zeitsprungmusters zeitlich an das Referenzsignal anzupassen.

Beispielsweise kann der Datensender 100 ausgebildet sein, um einen Sendezeitpunkt oder Sendezeitpunkte zum Senden der Daten zeitlich an einen Zeitpunkt des Referenzsignals anzupassen, so dass das Referenzsignal und das Senden der Daten zeitsynchronisiert ist.

Zum Beispiel kann der Datensender 100 ausgebildet sein, um einen Sendezeitpunkt (z.B. einen Sendezeitpunkt bei einem reinen Frequenzsprungmuster oder die Sendezeitpunkte (z.B. ersten Sendezeitpunkt und zweiten Sendezeitpunkt) bei einem reinen Zeitsprungmuster oder einem kombinierten Frequenz- und Zeitsprungmuster) an einen Sendezeitpunkt oder Empfangszeitpunkt des Referenzsignals anzupassen, so dass zwischen dem Sendezeitpunkt oder Empfangszeitpunkt des Referenzsignals und dem Sendezeitpunkt bzw. Sendezeitpunkten der Daten eine fest vorgegebene Zeitbeziehung (z.B. Zeitabstand bzw. Zeitabstände) eingehalten wird.

Der Datensender 100 kann ferner ausgebildet sein, um die Daten unter Verwendung des Frequenzsprungmusters und/oder Zeitsprungmusters frequenzsynchronisiert zu dem Referenzsignal auszusenden.

Beispielsweise kann der Datensender 100 ausgebildet sein, um eine Sendefrequenz bzw. Sendefrequenzen zum Senden der Daten an eine Frequenz des Referenzsignals anzupassen, so dass das Referenzsignal und das Senden der Daten frequenzsynchronisiert ist.

Zum Beispiel kann der Datensender 100 ausgebildet sein, um eine Sendefrequenz (z.B. eine Sendefrequenz bei einem reinen Zeitsprungmuster oder die Sendefrequenzen (z.B. erste Sendefrequenz und zweite Sendefrequenz) bei einem reinen Frequenzsprungmuster oder einem kombinierten Frequenz- und Zeitsprungmuster) an eine Sendefrequenz oder Empfangsfrequenz des Referenzsignals anzupassen, so dass zwischen der Sendefrequenz oder Empfangsfrequenz des Referenzsignals und der Sendefrequenz bzw. Sendefrequenzen der Daten eine fest vorgegebene Frequenzbeziehung (z.B. gleiche Frequenz, oder Frequenzabstand bzw. Frequenzabstände) eingehalten wird.

Ein Zeit- und Frequenzsprungmuster 140 kann die Kombination aus einem Frequenzsprungmuster und einem Zeitsprungmuster sein, d.h. eine Abfolge von Sendezeitpunkten oder Sendezeitabständen mit denen der Datensender 100 die Daten sendet, wobei den Sendezeitpunkten (oder Sendezeitabständen) Sendefrequenzen (oder Sendefrequenzsprünge) zugeordnet sind.

Bei Ausführungsbeispielen umfassen die Daten zumindest zwei Datenpakete 142 und 144, die entsprechend des Frequenzsprungmusters und/oder Zeitsprungmusters von dem Datensender 100 zu dem Datenempfänger 110 übertragen werden.

Die Daten können dabei so übertragen werden, dass zwischen den zumindest zwei Datenpaketen 142 und 144 Sendepausen (Pausen in denen der Datensender nicht sendet) vorhanden sind.

Die Daten sind ein Telegramm, das in die zumindest zwei Datenpakete 142 und 144 aufgeteilt ist, wobei jedes der zumindest zwei Datenpakete 142 und 144 kürzer ist als das Telegramm.

Bei Ausführungsbeispielen kann der Datensender 100 eine Sendeeinrichtung (Transmitter) 102 aufweisen, die ausgebildet ist, um die Daten 120 zu senden. Die Sendeeinrichtung 102 kann mit einer Antenne 104 des Datensenders 100 verbunden sein. Der Datensender 100 kann ferner eine Empfangseinrichtung (Receiver) 106 aufweisen, die ausgebildet ist, um Daten zu empfangen. Die Empfangseinrichtung kann mit der Antenne 104 oder einer weiteren (separaten) Antenne des Datensenders 100 verbunden sein. Der Datensender 100 kann auch eine kombinierte Sendeempfangseinrichtung (Transceiver) aufweisen.

Der Datenempfänger 110 kann eine Empfangseinrichtung (Receiver) 116 aufweisen, die ausgebildet ist, um die Daten 120 zu empfangen. Die Empfangseinrichtung 116 kann mit einer Antenne 114 des Datenempfängers 110 verbunden sein. Ferner kann der Datenempfänger 110 eine Sendeeinrichtung (Transmitter) 112 aufweisen, die ausgebildet ist, um Daten zu senden. Die Sendeeinrichtung 112 kann mit der Antenne 114 oder einer weiteren (separaten) Antenne des Datenempfängers 110 verbunden sein.

Bei Ausführungsbeispielen kann der Datensender 100 ein Sensorknoten sein, während der Datenempfänger 110 eine Basisstation sein kann. Natürlich ist es auch möglich, dass der Datensender 100 eine Basisstation ist, während der Datenempfänger 110 ein Sensorknoten ist. Ferner ist es möglich, dass sowohl der Datensender 100 als auch der Datenempfänger 110 Sensorknoten sind. Des Weiteren ist es möglich, dass sowohl der Datensender 100 als auch der Datenempfänger 110 Basisstationen sind.

Im Folgenden werden detaillierte Ausführungsbeispiele des anhand von Fig. 1 vorgestellten Übertragungsverfahrens, das durch den Datensender 100 und den Datenempfänger 110 durchgeführt werden kann, näher erläutert.

Dabei werden Techniken aufgezeigt, die es ermöglichen, bereits vorhandene Standard Empfänger um das Telegramm Splitting Verfahren zu erweitern. Hierdurch kann eine bessere Störfestigkeit, ein besserer Durchsatz und in der Regel auch ein besserer Energieverbrauch am Datenempfänger (z.B. Sensorknoten) 110 erzielt werden.

In einem typischen Empfänger 110 ist die Synchronisation und Detektion der Telegramme meist die größte Herausforderung und erfordert die meiste Rechenleistung. Wird die Detektion ebenfalls mit Hilfe des Telegram Splitting Verfahrens durchgeführt erhöht dies den Energieverbrauch typisch noch weiter.

Um dies zu umgehen und trotzdem eine hohe Störfestigkeit, welche durch das Telegram Splitting Verfahren erreicht wird, zu erhalten, wird bei Ausführungsbeispielen eine Kombination aus einer (klassischen) Präambel und dem Telegram Splitting Verfahren eingesetzt.

Hierbei wird die Detektion des Empfängers in der Regel nicht angepasst und somit können alle bisherigen Algorithmen weiterverwendet werden. Der verhältnismäßig einfache Decoder kann um das Telegramm Splitting erweitert werden.

Die Detektion der Telegramme wird herkömmlicherweise beim Telegram Splitting Verfahren ebenfalls mit Hilfe der gesplitteten Hops (Datenpakete oder Subdatenpakete) durchgeführt. Da die übertragene Energie eines einzigen übertragenen Hops zur Detektion in der Regel nicht ausreicht, muss die Präambel über mehrere Hops aufgeteilt werden. Im Empfänger müssen diese unter sehr hohem Rechenaufwand wieder zusammengefügt werden, um die Detektion durchführen zu können.

### Erstes detailliertes Ausführungsbeispiel

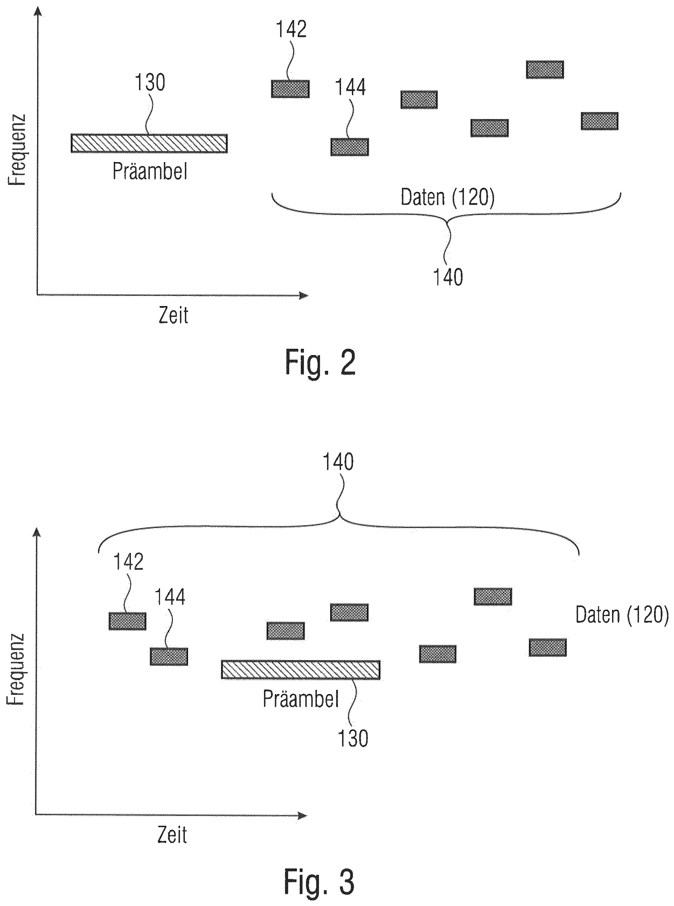

Um diesem Problem zu entgehen, können eine oder mehrere Präambeln nicht gesplittet, sondern am Stück übertragen werden. Hierdurch können für die Detektion klassische Methoden eingesetzt werden, welche sehr viel weniger Rechenleistung als die gesplitteten Präambeln benötigen. Die Daten können im Anschluss mit Telegramm Splitting übertragen um die Störfestigkeit zu gewährleisten, wie dies in Fig. 2 gezeigt ist.

Im Detail zeigt Fig. 2 in einem Diagramm eine Anordnung des Referenzsignals 130 relativ zu den Daten 120, die mittels eines Frequenz- und Zeitsprungmusters 140 übertragen werden, wobei das Referenzsignal 130 zeitlich vor den Daten 120 angeordnet ist. Dabei beschreibt die Ordinate die Frequenz und die Abszisse die Zeit.

Wie in Fig. 2 gezeigt ist, kann das Referenzsignal eine Präambel 130 sein. Die Präambel 130 kann am Stück übertragen werden. Die Präambel 130 kann dabei vor den Daten 120 (in den Datenpaketen 142 und 144) übertragen werden.

Mit anderen Worten, Fig. 2 zeigt einen Aufbau eines Telegramms mit klassischer Präambel 130 und den Daten 120 mit Telegram Splitting.

Die Präambel 130 kann dabei in der Regel eine andere Länge aufweisen als die Datenhops (Datenpakete oder Subdatenpakete) 142 und 144. Zusätzlich kann der Fall auftreten, bei dem die Längen der Datenhops 142 und 144 variieren und somit nicht konstant sind.

In den Hops 142 und 144 sind (wie bisher) weitere Präambeln enthalten. Damit ist die Präambel 130 zusätzlich vorhanden.

Bei Ausführungsbeispielen erfolgt keine Spreizung der Nutzdaten. Ferner können die Nutzdaten mit einem Fehlerschutz übertragen werden.

Bei Ausführungsbeispielen kann die Präambel 130 schmaler oder gleich breit relativ zu den Daten 120 sein. Mit anderen Worten, eine Datenrate, mit der die Präambel 130 übertragen wird, kann anders oder gleich einer Datenrate sein, mit der die Daten 120 (oder die Datenpakete 142 und 144) übertragen werden.

Bei Ausführungsbeispielen wird (senderseitig oder wellenformseitig) die Präambel 130 am Stück übertragen. Die Daten 120 werden mittels des Telegram Splitting Verfahrens in der Zeit und optional in der Frequenz verteilt.

Bei Ausführungsbeispielen kann (empfängerseitig oder decoderseitig) für die Detektion die (vorangestellt) gesendete Präambel 130 eingesetzt werden. Nach erfolgter Detektion können die Daten 120 entsprechend des Hopping-Musters (Sprungmusters) in der Zeit und Frequenz empfangen oder aus einem Buffer (Zwischenspeicher) ausgeschnitten und der Symbolrückgewinnung unterzogen werden.

### Zweites detailliertes Ausführungsbeispiel

Wenn ein koordiniertes System eingesetzt wird, dann können die Daten 120 nicht auf die zuvor ausgesendete Präambel, sondern auf Basis des Beacon der Basisstation ausgesendet werden.

Die Referenz ist somit nicht mehr ein (zuvor) gesendetes Signal, sondern ein empfangenes. Das Schema kann jedoch das gleiche sein, die Daten 120 können mittels des Telegram Splitting Verfahrens auf Basis des Beacon in der Zeit und Frequenz verteilt werden.

Der Vorteil ist hierbei ebenfalls die höhere Störfestigkeit, falls mehrere Sender die gleiche Frequenzressource belegen. Durch die Koordinierung des Systems handelt es sich beim Zugriffsverfahren um slotted ALOHA.

Bei Ausführungsbeispielen kann (senderseitig oder wellenformseitig) ein bidirektionales System mit Aussendung eines Referenzsignals (Beacon) eingesetzt werden. Die Daten 120 können mittels des Telegram Splitting Verfahrens in der Zeit und optional in der Frequenz verteilt werden und auf den Zeitpunkt und optional der Frequenz des Beacon ausgesendet werden.

Bei Ausführungsbeispielen kann (empfängerseitig oder decoderseitig) für die Detektion ein ausgesendetes Referenzsignal (Beacon) eingesetzt werden. Nach erfolgreicher Detektion des Beacon können die Daten 120 entsprechend des Hopping-Musters (Sprungmusters) in der Zeit und Frequenz empfangen oder aus einem Buffer (Zwischenspeicher) ausgeschnitten und der Symbolrückgewinnung unterzogen werden.

### Drittes detailliertes Ausführungsbeispiel

Die Datenhops 142 und 144 müssen dabei nicht zwingend nach der Präambel 130 übertragen werden. Es ist ebenfalls möglich, die Daten 120 vor der Präambel 130 anzufügen. Auch denkbar wäre es die Daten 120 in einem anderen Kanal parallel zur Präambel 130 zu senden.

Generell ist jede Kombination aus den vorherigen Methoden möglich, also dass beispielsweise vor und nach der Präambel 130 Daten 120 angestellt werden.

Es ist nur notwendig, dass der Empfänger 110 die Positionen der Datenhops 142 und 144 relativ zur Präambel 130 kennt. Die Hops 142 und 144 können optional mittels Frequency-Hopping (dt. Frequenzspringen) in der Frequenz verteilt werden. Dieses Schema wird in Fig. 3 veranschaulicht.

Im Detail zeigt Fig. 3 in einem Diagramm eine Anordnung des Referenzsignals 130 relativ zu den Daten 120, die mittels eines Frequenz- und Zeitsprungmusters 140 übertragen werden, wobei das Referenzsignal 130 zeitlich zwischen den Daten 120 angeordnet ist. Dabei beschreibt die Ordinate die Frequenz und die Abszisse die Zeit.

Wie in Fig. 3 gezeigt ist, kann das Referenzsignal eine Präambel 130 sein. Die Präambel 130 kann am Stück übertragen werden. Die Präambel 130 kann dabei zumindest teilweise zwischen den Daten 120 (oder Datenpaketen 142 und 144) so ausgesendet werden, dass die Aussendung der Präambel 130 nicht von der Aussendung der Daten 120 überlagert wird.

Mit anderen Worten, Fig. 3 zeigt einen Aufbau eines Telegramms mit klassischer Präambel 130 und den Daten 120 mit Telegram Splitting, wobei die Daten 120 nicht zwingend nach der Präambel 130 gesendet werden müssen.

Vorteil in dieser Methodik liegt in der verlängerten Kohärenzzeit, da diese nun in beide Richtungen (vor- und nach Präambel 130) genutzt werden kann.

Bei den Ausführungsbeispielen kann (senderseitig oder wellenformseitig) die Präambel 130 am Stück übertragen werden, wobei die Daten 120 mittels des Telegram Splitting Verfahrens in der Zeit und optional in der Frequenz vor, nach und/oder während der Präambel 130 verteilt werden.

Bei Ausführungsbeispielen kann (empfängerseitig oder decoderseitig) für die Detektion die (vorangestellt) gesendete Präambel 130 eingesetzt werden. Nach erfolgter Detektion können die Daten 120 entsprechend des Hopping-Musters (Sprungmusters) in der Zeit und Frequenz ausgeschnitten werden.

### Viertes detailliertes Ausführungsbeispiel

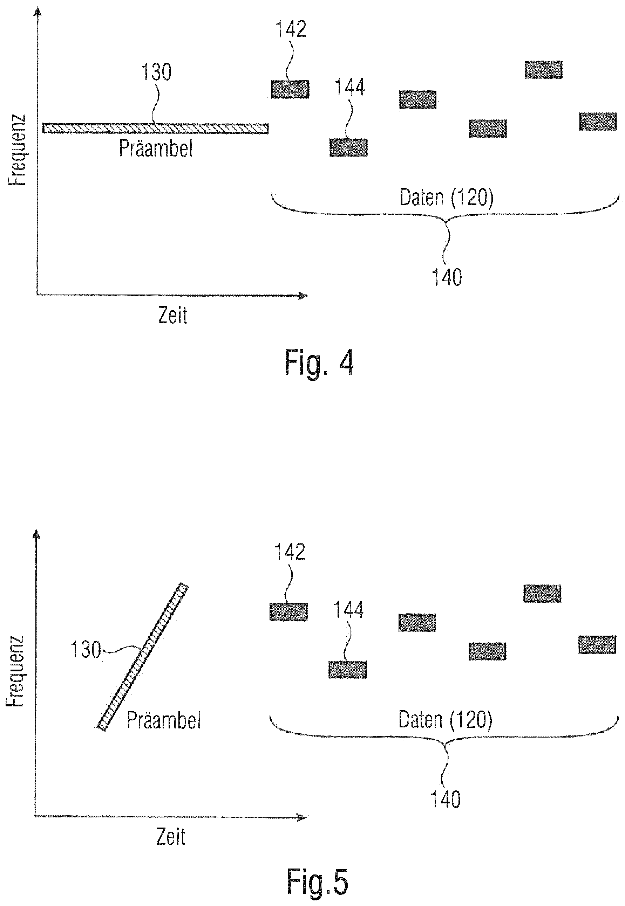

Um die Detektion bei geringem Signal- zu Rauschverhältnis (SNR) ebenfalls durchführen zu können, kann die Datenrate entsprechend der Präambel-Länge angepasst werden. Das bedeutet, dass die Datenrate der Präambel 130 im Allgemeinen eine andere ist als die der Daten 120, welche mit dem Telegram Splitting Verfahren übertragen werden. Einen solchen Aufbau zeigt Fig. 4.

Im Detail zeigt Fig. 4 in einem Diagramm eine Anordnung des Referenzsignals 130 relativ zu den Daten 120, die mittels eines Frequenz- und Zeitsprungmusters 140 übertragen werden, wobei das Referenzsignal 130 zeitlich vor den Daten 120 angeordnet ist. Dabei beschreibt die Ordinate die Frequenz und die Abszisse die Zeit.

Wie in Fig. 4 gezeigt ist, kann das Referenzsignal eine Präambel 130 sein. Die Präambel 130 kann am Stück übertragen werden. Die Präambel 130 kann dabei vor den Daten 120 (in den Datenpaketen 142 und 144) übertragen werden. Die Präambel 130 kann mit einer geringeren Datenrate übertragen werden als die Daten 120. Die niedrigere Datenrate der Präambel 130 im Vergleich zu den Daten 120 ist in Fig. 4 durch die Breite des Signals in Frequenzrichtung angedeutet.

Mit anderen Worten, Fig. 4 zeigt einen Aufbau eines Telegramms mit klassischer Präambel 130, den Daten 120 mit Telegram Splitting, wobei die Datenrate der Präambel reduziert wurde.

Beispielsweise kann für eine typische Präambel-Länge im Bereich von 16 bis 32 Symbolen die Datenrate der Präambel 130 etwa um den Faktor 10 bis 20 niedriger sein als die Datenrate der Daten 120, welche mit einer geringen Coderate der FEC (FEC = Forward Error Correction, dt. Vorwärtsfehlerkorrektur) codiert und mit Telegram Splitting übertragen werden.

Bei Ausführungsbeispielen kann (senderseitig oder wellenformseitig) die Präambel 130 am Stück übertragen werden, wobei die Daten 120 mittels des Telegram Splitting Verfahrens übertagen werden. Die Datenrate der Präambel 130 kann von derjenigen variieren, welche für die Daten 120 verwendet wird

Bei Ausführungsbeispielen kann (empfängerseitig oder decoderseitig) nach der Detektion für die Dekodierung eine andere Datenrate eingesetzt werden und somit zum Beispiel die Abtastrate verändert oder der Matched Filter (dt. Optimalfilter) gewechselt werden.

### Fünftes detailliertes Ausführungsbeispiel

Manche Modulationsarten lassen sich einfacher Detektieren. Andere haben dagegen jedoch eine bessere Performance hinsichtlich Bandbreiteneffizienz und Rauscheinflüssen.

Durch die Aufteilung des Telegramms in Präambel 130 und Daten 120 lässt sich ebenfalls die Modulationsart für beide Verfahren voneinander unabhängig wählen. Hierdurch können entsprechend für die Anwendung die besten Modulationsverfahren für die Detektion und den Daten voneinander unabhängig gewählt werden.

Zum Beispiel kann für die Synchronisation eine BPSK (BPSK = Binary Phase-Shift Keying, dt. binäre Phasenumtastung) eingesetzt werden, während für die Daten eine MSK (MSK = Minimum Shift Keying, dt. eine Form der digitalen Frequenzmodulation) eingesetzt werden kann.

Bei Ausführungsbeispielen kann (senderseitig oder wellenformseitig) die Präambel 130 eine andere Modulationsart aufweisen als die Daten 120.

Bei Ausführungsbeispielen kann (empfängerseitig oder decoderseitig) nach der Detektion für die Dekodierung eine andere Modulationsart eingesetzt werden und somit zum Beispiel die Abtastrate verändert werden oder der Matched Filter (dt. Optimalfilter) gewechselt werden.

### Sechstes detailliertes Ausführungsbeispiel

Die vorherige Idee kann noch erweitert werden, in dem sogar ein gänzlich anderes Übertragungsverfahren für die Präambel/Synchronisation 130 eingesetzt wird. Es ist prinzipiell jede Kombination möglich, sei es ein Spreizverfahren, schmalbandig oder auch OFDM (OFDM = Orthogonal Frequency-Division Multiplexing, dt. Orthogonales Frequenzmultiplexverfahren) können verwendet werden.

Beispielsweise kann für die Synchronisation ein Spreizverfahren eingesetzt werden, wie dies in Fig. 5 gezeigt ist.

Im Detail zeigt Fig. 5 in einem Diagramm eine Anordnung des Referenzsignals 130 relativ zu den Daten 120, die mittels eines Frequenz- und Zeitsprungmusters 140 übertragen werden, wobei das Referenzsignal 130 zeitlich vor den Daten 120 angeordnet ist, und wobei das Referenzsignal 130 in der Frequenz gespreizt ist. Dabei beschreibt die Ordinate die Frequenz und die Abszisse die Zeit.

Wie in Fig. 5 gezeigt ist, kann das Referenzsignal eine Präambel 130 sein. Die Präambel 130 kann am Stück übertragen werden. Die Präambel 130 kann dabei vor den Daten 120 (in den Datenpaketen 142 und 144) übertragen werden. Für die Präambel 130 kann ein Chirp Spread Sprectrum (CSS) Verfahren verwendet werden, während die Daten 120 in normaler Weise mit dem Telegram Splitting Verfahren übertragen werden können. Alternativ kann anstelle des Telegram Splitting Verfahrens auch ein normales Frequency-Hopping Verfahren (Frequenzsprungverfahren) zum Einsatz kommen, so dass zwischen den Teilpaketen 142 und 144 keine Pausen (Sendepausen) eingelegt werden.

Mit anderen Worten, Fig. 5 zeigt einen Aufbau eines Telegramms mit Präambel 130, den Daten 120 mit Telegramm Splitting, wobei die Präambel 130 mit einem CSS Verfahren (CSS = Chirp Spread Spectrum, dt. Zirpenfrequenzspreizung) moduliert wurde.

Zur Detektion kann somit eine CSS-Präambel eingesetzt werden, während die Daten mittels UNB-Modulation übertragen werden können. Die Daten 120 werden jedoch nicht am Stück auf einer Frequenz gesendet, sondern werden mittels Frequency-Hopping und/oder Telegram Splitting über der Zeit und Frequenz verteilt. Hierdurch ergibt sich der große Vorteil, der noch höheren Störfestigkeit bei einer nicht koordinierten Übertragung (z. B. ALOHA oder Slotted ALOHA). Der Vorteil gilt ebenfalls bei einem koordinierten System, denn durch das Frequency-Hopping Verfahren und Telegram Splitting Verfahren können bei gleichzeitiger Aussendung zweier Teilpakete 142 und 144 auf der gleichen Frequenz Teile des Telegramms nicht gesendet werden, die der Empfänger 110 durch eine Fehlerkorrektur wiederherstellen kann.

Bei Ausführungsbeispielen kann (senderseitig oder wellenformseitig) das Übertragungsverfahren der Präambel 130 nicht identisch mit dem Übertragungsverfahren der Daten 120 sein.

Bei Ausführungsbeispielen kann (empfängerseitig oder decoderseitig) nach der Detektion für die Dekodierung eine andere Methode zur Rückgewinnung der Symbole eingesetzt werden.

### Siebtes detailliertes Ausführungsbeispiel

Bei den vorherigen Methoden lässt sich die Synchronisation nun mit moderatem Rechenaufwand detektieren, es bleibt jedoch ein Problem mit der Störfestigkeit. Ist in den oberen Fällen während der Übertragung ein Störer im gleichen Frequenzband wie das Refernzsignalaktiv und besitzt am Empfänger eine höhere Leistung, lässt sich das Telegramm in der Regel nicht detektieren.

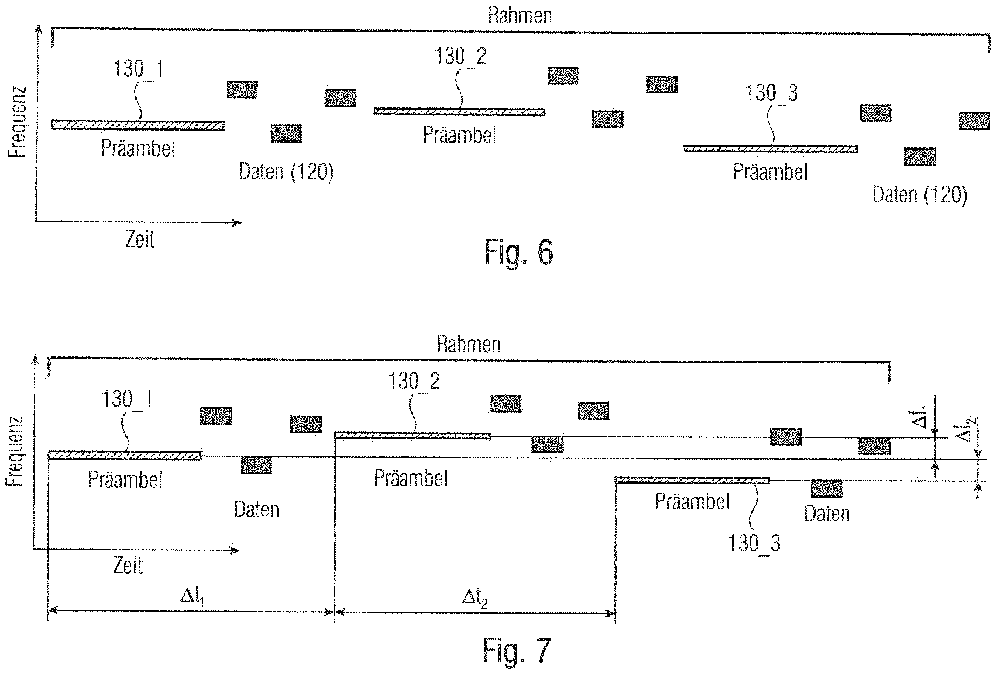

Um diesem Problem entgegenzuwirken, kann nicht nur eine Präambel 130 ausgesendet werden, sondern vor- und/oder nach- und/oder zwischen den Daten 120 wird von Zeit zu Zeit immer wieder eine Präambel 130 eingefügt. Dies zeigt Fig. 6.

Im Detail zeigt Fig. 6 in einem Diagramm eine Anordnung von drei Referenzsignalen 130_1 bis 130_3 relativ zu den Daten 120, die mittels eines Frequenz- und Zeitsprungmusters 140 übertragen werden, wobei die Referenzsignale 130_1 bis 130_3 zeitlich zwischen den Daten 120 so angeordnet sind, dass die Aussendung der Referenzsignale 130_1 bis 130_3 nicht von der Aussendung der Daten 120 überlagert wird. Dabei beschreibt die Ordinate die Frequenz und die Abszisse die Zeit.

Wie in Fig. 6 gezeigt ist, können die Referenzsignals 130_1 bis 130_3 Präambeln sein. Die Präambeln 130_1 bis 130_3 können jeweils am Stück übertragen werden.

Mit anderen Worten, Fig. 6 zeigt einen Aufbau eines Telegramms mit mehreren Präambeln 130_1 bis 130_3 und den Daten 120 welche mittels Telegram Splitting übertragen werden.

Wird nun durch Störungen eine der Präambeln 130_1 bis 130_3 nicht gefunden, geht nur ein Teil des Telegramms verloren und der Rest kann durch eine Vorwärtsfehlerkorrektur (FEC), wie sie bei Telegram Splitting eingesetzt wird, zurückgewonnen werden.

Im Unterschied zum Telegram Splitting ist jedoch festzuhalten, dass hier jede Präambel für sich selbst bei ähnlichem (nur wenige dB Unterschied) Signalrauschverhältnis (SNR) im Vergleich zum zur Dekodierung benötigtem Signalrauschverhältnis (SNR) detektieren lässt.

Bei Ausführungsbeispielen können (senderseitig oder wellenformseitig) mehrere Präambeln 130_1 bis 130_3 in ein Paket (oder Telegramm) eingebracht werden, diese müssen jedoch nicht die gleiche Datenrate oder das gleiche Modulationsverfahren wie das für die Daten 120 aufweisen.

Bei Ausführungsbeispielen kann (empfängerseitig oder Decoderseitig) jede Präambel 130_1 bis 130_3 für sich alleine dekodiert werden, wobei die Daten entsprechend der Detektion dekodiert werden können. Fehlt ein Teil des Telegramms kann dies vor der Vorwärtsfehlerkorrektur (FEC) in dem Empfangsdatenstrom eingefügt werden.

### Achtes detailliertes Ausführungsbeispiel

Ähnlich zu Telegram Splitting können die Pausen und die Frequenzsprünge zwischen den Präambeln 130_1 bis 130_3 definiert werden, wie dies in Fig. 7 gezeigt ist.

Im Detail zeigt Fig. 7 in einem Diagramm eine Anordnung von drei Referenzsignalen 130_1 bis 130_3 relativ zu den Daten 120, die mittels eines Frequenz- und Zeitsprungmusters 140 übertragen werden, wobei die Referenzsignale 130_1 bis 130_3 zeitlich zwischen den Daten 120 so angeordnet sind, dass die Aussendung der Referenzsignale 130_1 bis 130_3 nicht von der Aussendung der Daten 120 überlagert wird, und wobei die Referenzsignale 130_1 bis 130_3 einen festen Zeitabstand und Frequenzabstand zueinander aufweisen. Dabei beschreibt die Ordinate die Frequenz und die Abszisse die Zeit.

Wie in Fig. 7 gezeigt ist, können die Referenzsignale 130_1 bis 130_3 Präambeln sein. Die Präambeln 130_1 bis 130_3 können jeweils am Stück übertragen werden. Ferner haben die Referenzsignale 130_1 bis 130_3 jeweils einem festen Zeitabstand Δt₁ und Δt₂ und Frequenzabstand Δf₁ und Δf₂ zueinander.

Dies bietet den Vorteil, dass bei einer gestörten Präambel (z.B. der ersten Präambel 130_1), trotzdem auf alle Datenhops 142 und 144 geschlossen werden kann. Somit erhöht sich die Störfestigkeit der Daten 120 im Vergleich zum vorherigen Fall.

Jedoch ist nach wie vor im Unterschied zum Telegram Splitting jede Präambel 130_1 bis 130_3 für sich selbst bei ähnlichem (nur wenige dB Unterschied) Signalrauschverhältnis (SNR), im Vergleich zum zur Dekodierung benötigten Signalrauschverhältnis (SNR), detektierbar. Das heißt, die Detektion funktioniert im Gegensatz zum Telegram Splitting Verfahren auch mit nur einer einzigen Präambel. Ein weiterer Vorteil in der Kopplung der Präambeln 130_1 bis 130_3 zueinander durch ein definiertes Muster liegt darin, dass bei einer erfolgreichen Detektion (z.B. der ersten Präambel 130_1) die restlichen Präambeln (zweite Präambel 130_2 und dritte Präambel 130_3) nicht mehr detektiert werden müssen und somit weitere Rechenleistung gespart wird.

Bei niedrigen Signalrauschverhältnis (SNR) Werten besteht zusätzlich die Möglichkeit der Kombination der einzelnen Detektionsergebnisse jeder Präambel zu einer Gesamtdetektionswahrscheinlichkeit.

Bei Ausführungsbeispielen können (senderseitig oder decoderseitig) mehrere Präambeln 130_1 bis 130_3 in ein Paket (oder Telegramm) eingebracht werden. Zwischen diesen Präambeln 130_1 bis 130_3 gibt es ein definiertes Zeit- und Frequenzmuster.

Bei Ausführungsbeispielen kann (senderseitig oder wellenformseitig) jede Präambel 130_1 bis 130_3 für sich alleine dekodiert werden. Der Empfänger 110 kann jedoch aufgrund einer empfangen Präambel auf die nicht detektierten Präambeln schließen und kann auf diese Weise alle Daten zur Dekodierung nutzen. Des Weiteren kann die Detektion nach dem Empfang einer Präambel beendet werden.

### Neuntes detailliertes Ausführungsbeispiel

Sind die zeitlichen Abstände zwischen den Präambeln 130_1 bis 130_3 bekannt, genügt es wie im vorherigen Beispiel gezeigt, nur eine der Präambeln zu detektieren.

Anstelle nun alle Präambeln 130_1 bis 130_3 mit der gleichen Datenrate und dem gleichen Modulationsverfahren auszusenden, können sowohl die Modulation als auch die Datenrate der einzelnen Präambeln 130_1 bis 130_3 variiert werden. Somit kann beispielsweise eine sehr einfach zu detektierende Präambel für einfache Empfänger eingesetzt werden. Für komplexere Empfänger steht noch eine rechenintensivere Detektion mit einer weiteren Präambel zur Verfügung.

Wird wie in dem zweiten detaillierten Ausführungsbeispiel beschrieben, die Datenrate der Präambel reduziert, hat dies zur Folge, dass die zeitliche Auflösung der Detektion entsprechend dem Faktor um welche die Datenrate reduziert wird, verschlechtert wird. Durch den oben beschriebenen Ansatz lässt sich mit zwei Präambeln jedoch trotzdem die volle Genauigkeit erzielen, ohne großen Rechenaufwand. Hierfür wird zunächst eine "grobe" Synchronisation mit der einfachen Methode durchgeführt und falls eine Präambel gefunden wurde, kann die feine Detektion auf der anderen Präambel berechnet werden.

Je nach Performanceklasse gibt es folgende vier Detektionsmöglichkeiten. Erstens, eine Niedrig-Energie-Detektion (Low Power Detektion) auf Basis der einfach zu findenden Präambel. Zweitens, eine Niedrig-Energie-Detektion (Low Power Detektion) auf Basis der einfach zu findenden Präambel und anschließend eine feine Detektion auf Basis der vorherigen Detektion. Drittens, eine Hoch-Energie-Detektion (High Power Detektion) auf der Basis der komplexeren Präambel. Viertens, eine Kombination aus der Hoch-Energie-Detektion (High Power Detektion) auf der Basis der komplexeren Präambel und der Niedrig-Energie-Detektion (Low Power Detektion) auf der Basis der einfach zu findenden Präambel.

Bei Ausführungsbeispielen können (senderseitig oder wellenformseitig) verschiedene Modulationsarten und/oder verschiedene Datenraten für die Präambeln eingesetzt werden.

### Zehntes detailliertes Ausführungsbeispiel

Anstelle der in dem neunten detaillierten Ausführungsbeispiel beschriebenen Möglichkeit der Verwendung der verschiedenen Präambeln für verschiedene Empfänger lässt sich auch eine sog. Vor- und/oder Nach- und/oder Zwischen- Präambel einfügen, welche leicht zu detektieren ist.

Hierbei wird vor der eigentlichen Präambel eine weitere Präambel angestellt, die ohne großen Rechenaufwand zu detektieren ist, jedoch eine relativ geringe zeitliche Genauigkeit liefert. Wird die Vor-Präambel detektiert, muss nur noch ein kleiner zeitlicher Suchbereich nach der eigentlichen Präambel abgesucht werden.

In der Regel besitzt die Vor-Präambel eine andere Datenrate als die eigentliche Präambel. Damit die Vorpräambel leichter zu detektieren ist, wird üblicherweise die Datenrate weiter reduziert.

Die Läge der Vor-Präambel kann von der Länge der eigentlichen Präambel abweichen. Es ist ebenfalls möglich eine andere Modulationsart zu wählen.

Diese Methode hat im Vergleich zur vorherigen den Vorteil, dass alle Präambeln auch mit einem einfachen Empfänger detektiert werden.

Bei Ausführungsbeispielen kann (senderseitig oder wellenformseitig) vor der eigentlichen Präambel eine weitere dem Empfänger bekannte Sequenz ausgesendet werden.

Bei Ausführungsbeispielen kann (empfängerseitig oder decoderseitig) eine Vordetektion durchgeführt werden und falls diese erfolgreich ist, kann eine weitere feinere Detektion in einem gewissen Suchbereich durchgeführt werden.

### Elftes detailliertes Ausführungsbeispiel

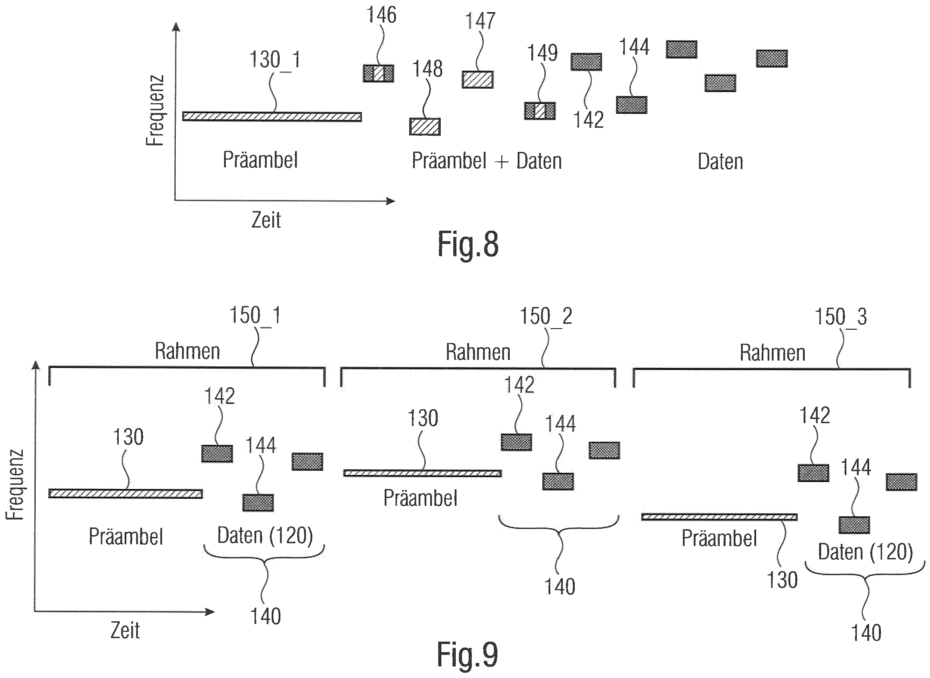

Um bei Störungen höhere Detektionsfähigkeit bei genügend Rechenleistung sowie und/oder zeitlich genaue Synchronisation und/oder bessere Frequenzschätzung zu erhalten, können zusätzlich zu den Präambeln auch Synchronisationssequenzen in den Hops eingefügt werden oder zusätzliche reine Synchronisationsshops in das Telegramm eingebracht werden, wie dies in Fig. 8 gezeigt ist.

Im Detail zeigt Fig. 8 in einem Diagramm eine Anordnung eines Referenzsignals 130 relativ zu den Daten 120, die mittels eines Frequenz- und Zeitsprungmusters 140 übertragen werden, wobei das Referenzsignal 130 zeitlich vor den Daten 120 angeordnet ist, wobei die Datenpakete (Hops) mit zusätzlichen Synchronisationssequenzen versehen sind. Dabei beschreibt die Ordinate die Frequenz und die Abszisse die Zeit.

Wie in Fig. 8 gezeigt ist, kann das Referenzsignal 130 eine Präambel sein. Die Präambel 130 kann am Stück übertragen werden. Ferner sind die Datenpakete zumindest teilweise mit Synchronisationssequenzen versehen, so dass neben den Datenpaketen 142 und 144 mit reinen Daten auch Datenpakete 146 und 149 vorhanden sind, die sowohl Daten als auch Synchronisationssequenzen aufweisen, und Datenpakete 147 und 148 vorhanden sind, die nur Synchronisationssequenzen aufweisen.

Mit anderen Worten, Fig. 8 zeigt eine Kombination aus einer Präambel 130 zur groben Detektion und in den Hops 146 bis 149 Synchronisationssequenzen zur feinen Detektion.

Die Präambel 130 würde dann für den Zweck der groben Paketdetektion eingesetzt werden und müsste auch nur noch dieses Kriterium erfüllen. Dadurch kann in den meisten Fällen die Länge der Präambel deutlich reduziert werden.

Ist in einem Empfänger genug Rechenleistung vorhanden, besteht die Möglichkeit die Detektion direkt auf den Synchronisationssequenzen in den Hops 146 bis 149 zu berechnen. Dies bietet den Vorteil der besseren Störfestigkeit bei der Detektion.

Bei Ausführungsbeispielen können (senderseitig oder wellenformseitig) zusätzlich zur eigentlichen Präambel 130 weitere Synchronisationssequenzen in den Hops oder reine Synchronisationshops in das Telegramm eingebracht werden.

Bei Ausführungsbeispielen kann (empfängerseitig oder decoderseitig) eine Vordetektion durchgeführt werden und falls diese erfolgreich ist, eine weitere feinere Detektion in einem gewissen Suchbereich durchgeführt werden. Hochleistungsempfänger (High Performance Empfänger) können die Detektion direkt auf den Hops berechnen.

### Zwölftes detailliertes Ausführungsbeispiel

Wird eine sog. Wiederholung der Daten (engl. Repetition) eingesetzt, können die Daten mittels MRC (MRC = Maximal-Ratio Combining, dt. eine Diversitätsmethode zur Rückgewinnung eines Signals aus den kombinierten Einzelsignalen) oder anderer Techniken zu einem Gesamtergebnis zusammengefügt werden. Dies erhöht die Störfestigkeit der Daten aber auch die Performance gegen Rauschen sehr stark, je nachdem wie viele Wiederholungen verwendet werden. Als guter Richtwert ergibt sich aus der Praxis eine dreifache Wiederholung.

Hierbei werden, anstelle von neuen Daten bei jeder neuen Präambel, die Daten wiederholt. Im Falle, dass die Abstände zwischen den Präambeln bekannt sind, genügt es auch hier dass bereits bei einer korrekt detektierten Präambel die Positionen aller anderen berechnet werden können. Andernfalls müssen für das MRC zumindest zwei Präambeln der gleichen Daten detektiert werden.

Im Unterschied zum fünften detaillierten Ausführungsbeispiel besteht jeder Rahmen (Frame) wieder aus nur einer Präambel und den zugehörigen Daten, wie dies in Fig. 9 gezeigt ist.

Im Detail zeigt Fig. 9 in einem Diagramm eine sich wiederholende Anordnung von einem Referenzsignal 130 und Daten 120, die mittels eines Frequenz- und Zeitsprungmusters 140 übertragen werden, wobei das Referenzsignal 130 jeweils zeitlich vor den Daten 120 angeordnet ist. Dabei beschreibt die Ordinate die Frequenz und die Abszisse die Zeit.

Wie in Fig. 9 gezeigt ist, kann das Referenzsignal 130 eine Präambel sein. Die Präambel 130 kann am Stück übertragen werden. Die Anordnung von dem Referenzsignal 130 und den Daten 120 wiederholt sich in Fig. 9 beispielhaft drei Mal, wobei die Anordnung von dem Referenzsignal 130 und den Daten 120 bei der Wiederholung in der Frequenz verschoben sein kann. In Fig. 9 wird die sich wiederholende Anordnung aus Referenzsignal 130 und den Daten 120 als Rahmen (Frame) 150_1 bis 150_3 bezeichnet.

Mit anderen Worten, Fig. 9 zeigt einen Aufbau eines Telegramms mit dreifacher Wiederholung der Frames 150_1 bis 150_3.

In Fig. 9 zeigt sich, dass die Rahmen (Frames) 150_1 bis 150_3 in sehr einfacher Weise mehrfach ausgesendet werden. Hierbei ei ist es nicht notwendig, dass die Wiederholung auf den gleichen Frequenzen stattfindet. Auch die Zeitabstände können zwischen den Frames variieren. Es ist ebenfalls möglich ein anderes Sprungmuster einzusetzen, falls das dem Empfänger bekannt ist.

Bei Ausführungsbeispielen können (senderseitig oder wellenformseitig) die gleichen Daten mehrmals ausgesendet werden.

Bei Ausführungsbeispielen kann (empfängerseitig oder decoderseitig) der Decoder die Informationen aus allen empfangenen Wiederholungen zu einem Gesamttelegramm kombinieren.

### Dreizehntes detailliertes Ausführungsbeispiel

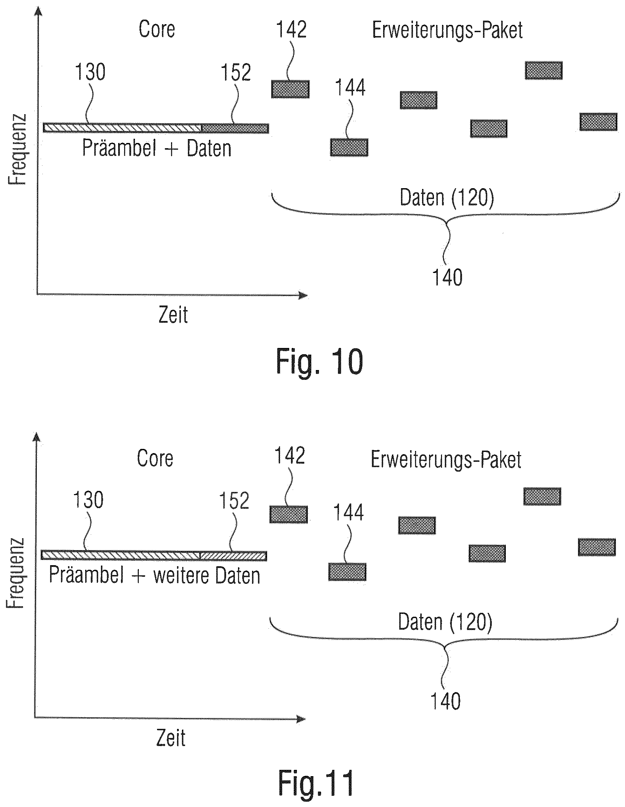

Fig. 10 zeigt in einem Diagramm eine Anordnung des Referenzsignals 130 relativ zu den Daten 120, die mittels eines Frequenz- und Zeitsprungmusters 140 übertragen werden, wobei das Referenzsignal 130 zeitlich vor den Daten 120 angeordnet ist, und wobei weitere Daten 152 zusammen dem Referenzsignal 130 übertragen werden. Dabei beschreibt die Ordinate die Frequenz und die Abszisse die Zeit.

Wie in Fig. 10 gezeigt ist, kann das Referenzsignal eine Präambel 130 sein. Die Präambel 130 kann am Stück übertragen werden. Die Präambel 130 kann dabei vor den Daten 120 (in den Datenpaketen 142 und 144) übertragen werden. Der Präambel können weitere Daten 152 angehängt werden.

Mit anderen Worten, Fig. 10 zeigt einen Aufbau eines Telegramms bestehend aus einer Kernsequenz (Präambel 130 und weitere Daten 152) und einer Erweiterungssequenz (Daten mit Telegram Splitting).

Wie in Fig. 10 zu erkennen ist, kann die Präambel 130 um ein Datenfeld 152 erweitert werden oder die Daten können in der Präambel mit eingebracht werden. Dieses Datenfeld bildet zusammen mit der Präambel ein sog. Kern-Paket (Core Packet) oder Kernsequenz.

Liegen beispielsweise nur sehr wenige Daten zur Übertragung vor, muss somit nicht zwingend bei sehr wenigen Daten die gesplitteten Hops erzeugt und übertragen werden.

Da die Kerndaten durch das Anhängen an die Präambel jedoch sehr störanfällig sind, sollte die Information durch eine Wiederholung geschützt werden. Hier wäre es somit auch möglich, nur die Information in dem Kern-Paket zu wiederholen, da die Daten mittels Telegram Splitting bereits eine bessere Störfestigkeit besitzen

Werden nach dem Kern-Paket noch Datenhops 142 und 144 angestellt, werden diese als Erweiterungs-Paket (Extension) oder Erweiterungssequenz bezeichnet.

Bei Ausführungsbeispielen können (senderseitig oder wellenformseitig) nach der Präambel 130 dem Empfänger unbekannte Nutzdaten angefügt (vor, während oder nach der Präambel 130) werden.

Bei Ausführungsbeispielen kann (empfängerseitig oder decoderseitig) der Decoder die übertragenen Informationen aus zwei verschiedenen Bereichen extrahieren. Hierbei kann die Dekodierung in getrennten Schritten oder zusammen erfolgen.

### Vierzehntes detailliertes Ausführungsbeispiel

Fig. 11 zeigt in einem Diagramm eine Anordnung des Referenzsignals 130 relativ zu den Daten 120, die mittels eines Frequenz- und Zeitsprungmusters 140 übertragen werden, wobei das Referenzsignal 130 zeitlich vor den Daten 120 angeordnet ist, und wobei weitere Daten 152 zusammen dem Referenzsignal 130 übertragen werden. Dabei beschreibt die Ordinate die Frequenz und die Abszisse die Zeit.

Wie in Fig. 11 gezeigt ist, kann das Referenzsignal eine Präambel 130 sein. Die Präambel 130 kann am Stück übertragen werden. Die Präambel 130 kann dabei vor den Daten 120 (in den Datenpaketen 142 und 144) übertragen werden. Der Präambel können weitere Daten 152 angehängt werden. Die weiteren Daten 152 können Informationen bezüglich des Frequenzsprungmusters und/oder Zeitsprungmusters enthalten.

Mit anderen Worten, Fig. 10 bzw. Fig. 11 zeigt einen Aufbau eines Telegramms bestehend aus einem Kernsequenz (Präambel 130 und Header 152) und einer Erweiterungssequenz (Daten mit Telegram Splitting).

Anstelle von reinen Nutzdaten nach der Präambel 130 kann also auch ein Teil oder die gesamte Information im Kern-Paket zur Definition weiterer Übertragungsparameter der Extension genutzt werden.

So lassen sich zum Beispiel die Datenrate, das Sprungmuster (Zeit und Frequenz), die Hoplängen oder das genutzte Frequenzband signalisieren.

Vorteil der Signalisierung der folgenden Extension liegt darin, dass die zeitliche Lage und das Muster frei konfiguriert werden können. Somit kann bei jeder Aussendung ein zufälliges Sprungmuster gewählt werden, um die Daten zu übertragen. Dies erhöht die Übertragungssicherheit enorm. Liegen dem Sender Informationen über andere Übertragungen oder Störern vor, kann er das Muster so anpassen, dass es zu keinen Überlagerungen kommt

Soll eine Basisstation beispielsweise zwei Sensorknoten zur gleichen Zeit antworten, ist dies mit unterschiedlichen Sprungmustern möglich, ohne dass es zu einer komplett Überlagerung kommt. Des Weiteren kann die Basisstationen die Aussendungen zu mehreren Teilnehmern kombinieren und somit Carrier Aggregation (CA) durchführen.

Bei Ausführungsbeispielen können (senderseitig oder wellenformseitig) nach der Präambel dem Empfänger unbekannte Nutzdaten angestellt werden, welche (teilweise) für die Signalisierung eingesetzt werden können.

Bei Ausführungsbeispielen kann (empfängerseitig oder decoderseitig) der Decoder die übertragenen Informationen aus zwei verschiedenen Bereichen extrahieren. Hierbei wird (teilweise) die Information aus dem Kern zur Generierung der Sprungmuster, Hoplängen u.ä. der Erweiterungssequenz eingesetzt.

Obwohl in den obigen Ausführungsbeispielen davon ausgegangen wird, dass das Referenzsignal eine Präambel ist, ist die Erfindung nicht auf solche Ausführungsbeispiele beschränkt. Vielmehr kann das Referenzsignal auch ein Beacon sein, wobei obige Ausführungsbeispiele analog gelten.

### Fünfzehntes detailliertes Ausführungsbeispiel

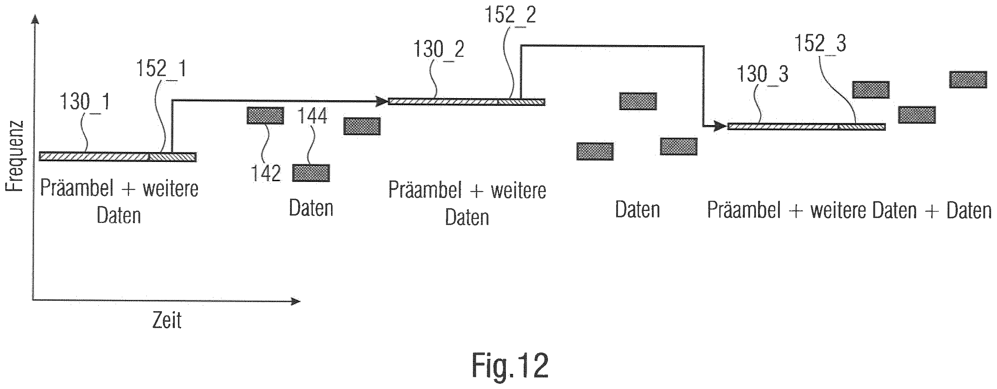

Anstelle der Signalisierung der Extension im Core, ist es ebenfalls möglich die Position der anderen Kernsequenzen zu signalisieren. Hierfür besitzt jede Kernsequenz eine andere Information, damit es möglich ist auf jede andere Kernsequenz zu schließen, wie dies in Fig. 12 gezeigt ist.

Fig. 12 zeigt in einem Diagramm eine Anordnung von drei Referenzsignalen 130_1 bis 130_3 relativ zu den Daten 120, die mittels eines Frequenz- und Zeitsprungmusters 140 übertragen werden, wobei die Referenzsignale 130_1 bis 130_3 zeitlich zwischen den Daten 120 so angeordnet sind, dass die Aussendung der Referenzsignale 130_1 bis 130_3 nicht von der Aussendung der Daten überlagert wird, wobei die Referenzsignale 130_1 bis 130_3 jeweils zusammen mit weiteren Daten 152_1 bis 152_3 übertragen werden. Dabei beschreibt die Ordinate die Frequenz und die Abszisse die Zeit.

Wie in Fig. 12 gezeigt ist, können die Referenzsignale Präambeln 130_1 bis 130_3 sein. Die Präambeln 130_1 bis 130_3 können jeweils am Stück übertragen werden. Die Präambeln 130_1 bis 130_3 können zeitlich zwischen den Daten 120 so gesendet werden, dass Präambeln 130_1 bis 130_3 nicht von Daten überlagert werden. Den Präambeln 130_1 bis 130_3 können jeweils weitere Daten 152_1 bis 152_3 angehängt werden. Die weiteren Daten 152_1 bis 152_3 können Informationen bezüglich der anderen Präambeln 130_1 bis 130_3 und/oder weiteren Daten 152_1 bis 152_3 und/oder Informationen zu den Daten 142, 146 enthalten.

Mit anderen Worten, Fig. 12 zeigt einen Aufbau eines Telegramms bestehend aus einer Kernsequenz (Präambel und Header) und einer Erweiterungssequenz (Daten mit Telegram Splitting) wobei die Lage der Präambeln in Header signalisiert wird.

Beispielsweise können drei Kernsequenzen pro Telegramm eingesetzt werden. Somit kann in der ersten Kernsequenz die Information über die zweite und dritte Kernsequenz, relativ zu dieser Sequenz, definiert und eingebracht sein. Für die anderen beiden Kernsequenzen gilt das analog.

Diese Methodik bietet den großen Vorteil, dass die Abstände zwischen den Präambeln / Kernsequenzen nicht über alle Telegramme gleich sein müssen. Werden von mehreren Teilnehmern gleichzeitig Telegramme übertragen, welche das gleiche Sprungmuster für die einzelnen Kernsequenzen verwenden, kommt es häufig zu Totalüberlagerungen. Sind die Sprungmuster der Kernsequenzen der Telegramme zufällig verteilt, sinkt die Wahrscheinlichkeit einer Totalüberlagerung sehr stark ab. Damit lassen sich weitaus mehr Telegramme.

Bei Ausführungsbeispielen können (senderseitig oder wellenformseitig) nach der Präambel dem Empfänger unbekannte Nutzdaten angestellt werden, welche (teilweise) für die Signalisierung eingesetzt werden.

Bei Ausführungsbeispielen kann (empfängerseitig oder decoderseitig) der Decoder die übertragenen Informationen aus zwei verschiedenen Bereichen extrahieren. Hierbei wird die Information (teilweise) aus dem Kern zur Generierung der Sprungmuster, Hoplängen u.ä. der Erweiterungssequenz eingesetzt.

### Weitere Ausführungsbeispiele

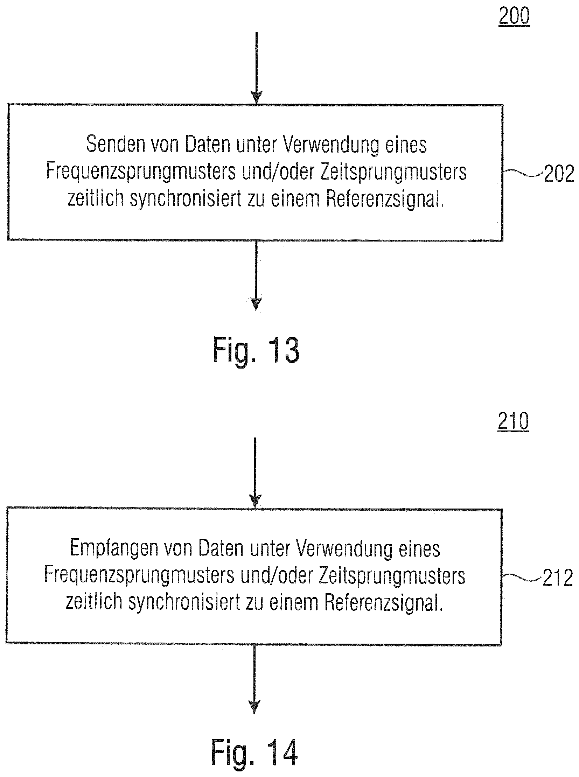

Fig. 13 zeigt ein Flussdiagramm eines Verfahrens 200 zum Senden von Daten, gemäß einem Ausführungsbeispiel. Das Verfahren 200 umfasst einen Schritt 202 des Sendens von Daten unter Verwendung eines Frequenzsprungmusters und/oder Zeitsprungmusters zeitlich synchronisiert zu einem Referenzsignal.

Fig. 14 zeigt ein Flussdiagramm eines Verfahrens 210 zum Empfangen von Daten. Das Verfahren 210 umfasst einen Schritt 212 des Empfangens von Daten unter Verwendung eines Frequenzsprungmusters und/oder Zeitsprungmusters zeitlich synchronisiert zu einem Referenzsignal.

Bei Ausführungsbeispielen wird eine einfach zu delektierenden Präambel und das Telegram Splitting Verfahren kombiniert.

Bei Ausführungsbeispielen werden mehrere einfach zu detektierenden Präambeln kombiniert.

Bei Ausführungsbeispielen werden Signalisierungsinformation oder Nutzdaten zu der einfach zu detektierenden Präambel eingebracht.

Ausführungsbeispiele schaffen ein System zur Übertragung von Daten von vielen Sensorknoten zu einer Basisstation. Die hierin beschriebenen Konzepte können jedoch für jede beliebige Übertragung eingesetzt werden, falls der Kanal nicht koordiniert (ALOHA oder Slotted-ALOHA Zugriffsverfahren) ist und der Empfänger somit nicht weiß wann ein Paket übertragen wird. Zusätzlich kann es hierdurch zu Überlagerungen mit anderen Teilnehmern kommen, was Störungen während der Übertragung hervorruft.

Das genutzte Funkübertragungsband kann, muss aber hierbei nicht exklusiv für diese Übertragung reserviert sein. Die Frequenzressource kann mit vielen weiteren Systemen geteilt werden, was eine zuverlässige Übertragung der Information erschwert.

Die Ausführungsbeispiele schaffen Techniken, mit denen klassische Empfänger um das Telegram Splitting Verfahren erweitert werden können, ohne dabei eine aufwändigere Detektion der Telegramme durchführen zu müssen. Hierbei können verschiedene Kombinationen hinsichtlich Datenrate, Modulationsverfahren und Längen aus Präambel und den Daten angewendet werden. Zusätzlich ist es möglich ein Telegramm in eine Kern- und Erweiterungssequenz zu unterteilen, wobei die Kernsequenz u.a. als Signalisierung eingesetzt werden kann. Werden mehr als eine Präambel übertragen, lässt sich durch geschickte Kombination die Leistungsfähigkeit (engl. Performance) des Systems gegenüber bekannten Algorithmen weiter verbessern.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahingehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist. Der Datenträger, das digitale Speichermedium oder das computerlesbare Medium sind typischerweise gegenständlich und/oder nicht-vergänglich bzw. nichtvorübergehend.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahingehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahingehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) oder eine Grafikkarte (GPU) sein oder für das Verfahren spezifische Hardware, wie beispielsweise ein ASIC.

Die hierin beschriebenen Vorrichtungen können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Vorrichtungen, oder jedwede Komponenten der hierin beschriebenen Vorrichtungen können zumindest teilweise in Hardware und/oder in Software (Computerprogramm) implementiert sein.

Die hierin beschriebenen Verfahren können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Verfahren, oder jedwede Komponenten der hierin beschriebenen Verfahren können zumindest teilweise durch Hardware und/oder durch Software ausgeführt werden.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Datensender (100), der ausgebildet ist, um Daten (120) unter Verwendung eines Frequenzsprungmusters (140) und/oder Zeitsprungmusters (140) zeitlich synchronisiert zu einem Referenzsignal (130) auszusenden;
wobei der Datensender (100) ausgebildet ist, um das Referenzsignal (130) selbst auszusenden,
wobei das Referenzsignal (130) zumindest zwei Präambeln (130_1: 130_3) umfasst,
wobei eine erste Präambel (130_1) der zumindest zwei Präambeln (130_1:130_3) am Stück bei einer Frequenz übertragen wird;
wobei der Datensender (100) ausgebildet ist, um die erste Präambel (130_1) so auszusenden, dass diese empfängerseitig für eine vollständige Detektion geeignet ist;
wobei die Daten (120) zumindest zwei Datenpakete (142;144) umfassen, wobei der Datensender (100) ausgebildet ist, um die zumindest zwei Datenpakete (142;144) entsprechend des Frequenzsprungmusters (140) und Zeitsprungmusters (140) auszusenden;
wobei die Daten (120) ein Telegramm sind, wobei der Datensender (100) ausgebildet ist, um das Telegramm in die zumindest zwei Datenpakete (142;144) aufzuteilen, wobei jedes der zumindest zwei Datenpakete (142;144) kürzer ist als das Telegramm;
wobei der Datensender (100) ausgebildet ist, um eine zweite Präambel (130_2) der zumindest zwei Präambeln (130_1:130_3) in zumindest zwei Teilpräambeln aufzuteilen und die zumindest zwei Teilpräambeln zeitlich und/oder frequenzmäßig voneinander beabstandet auszusenden;
wobei der Datensender (100) ausgebildet ist, um die zumindest zwei Datenpakete (142;144) mit den zumindest zwei Teilpräambeln zu versehen,
wobei die zumindest zwei Teilpräambeln jeweils kürzer sind als die erste Präambel (130_1).

2. Datensender (100) nach Anspruch 1, wobei der Datensender (100) ausgebildet ist, um weitere Daten zusammen mit der ersten Präambel (130_1) am Stück zu übertragen.

3. Datensender (100) nach einem der vorhergehenden Ansprüche, wobei die Daten (120) Präambelsymbole enthalten.

4. Datensender (100) nach einem der vorhergehenden Ansprüche, wobei der Datensender (100) ferner ausgebildet ist, um die Daten (120) unter Verwendung des Frequenzsprungmusters (140) und Zeitsprungmusters (140) frequenzsynchronisiert zu dem Referenzsignal (130) auszusenden.

5. Datensender (100) nach einem der vorangehenden Ansprüche, wobei der Datensender (100) ausgebildet ist, um die erste Präambel (130_1) vor den Daten (120) auszusenden.

6. Datensender (100) nach einem der vorangehenden Ansprüche, wobei der Datensender (100) ausgebildet ist, um die erste Präambel (130_1) mit einer geringeren Datenrate auszusenden als die Daten (120).

7. Datensender (100) nach einem der vorangehenden Ansprüche, wobei der Datensender (100) ausgebildet ist, um die erste Präambel (130_1) mit einer anderen Modulationsart oder einem anderen Modulationsverfahren auszusenden als die Daten (120).

8. Datensender (100) nach einem der vorangehenden Ansprüche, wobei der Datensender (100) ausgebildet ist, um weitere Daten (152) zusammen mit der ersten Präambel (130_1) zu übertragen.

9. Datensender (100) nach Anspruch 8, wobei zumindest ein Teil der weiteren Daten (152), die mit der ersten Präambel (130_1) übertragen werden, Informationen bezüglich des Frequenzsprungmusters (140) und Zeitsprungmusters (140) der Daten (120) enthalten.

10. Datenempfänger (110), der ausgebildet ist, um Daten (120) unter Verwendung eines Frequenzsprungmusters (140) und Zeitsprungmusters (140) zeitlich synchronisiert zu einem Referenzsignal (130) zu empfangen oder aus einem Zwischenspeicher zu extrahieren;
wobei das Referenzsignal (130) zumindest zwei Präambeln (130_1: 130_3) umfasst,
wobei eine erste Präambel (130_1) der zumindest zwei Präambeln (130_1:130_3) am Stück bei einer Frequenz übertragen wird,
wobei die Daten (120) zumindest zwei Datenpakete (142;144) umfassen, wobei der Datenempfänger (110) ausgebildet ist, um die zumindest zwei Datenpakete (142;144) entsprechend des Frequenzsprungmusters (140) und Zeitsprungmusters (140) zu empfangen oder aus dem Zwischenspeicher zu extrahieren,
wobei die Daten (120) ein Telegramm sind, das in die zumindest zwei Datenpakete (142; 144) aufgeteilt ist, wobei jedes der zumindest zwei Datenpakete kürzer ist als das Telegramm;
wobei der Datenempfänger (110) ausgebildet ist, um die zumindest zwei Datenpakete (142;144) zu kombinieren, um das Telegramm zu erhalten;
wobei eine zweite Präambel der zumindest zwei Präambeln (130_1:130_3) in zumindest zwei Teilpräambeln aufgeteilt ist und die zumindest zwei Teilpräambeln zeitlich und/oder frequenzmäßig voneinander beabstandet übertragen werden,
wobei die zumindest zwei Datenpakete (142;144) mit den zumindest zwei Teilpräambeln versehen sind,
wobei die zumindest zwei Teilpräambeln jeweils kürzer sind als die erste Präambel (130_1).

11. Datenempfänger (110) nach Anspruch 10, wobei der Datenempfänger (110) ferner ausgebildet ist, um die Daten (120) unter Verwendung des Frequenzsprungmusters (140) und Zeitsprungmusters (140) frequenzsynchronisiert zu dem Referenzsignal (130) zu empfangen oder aus dem Zwischenspeicher zu extrahieren.

12. Datenempfänger (110) nach einem der Ansprüche 10 bis 11, wobei die erste Präambel (130_1) zusammen mit weiteren Daten (152) empfangen oder aus dem Zwischenspeicher extrahiert wird.

13. Datenempfänger (110) nach Anspruch 12, wobei die weiteren Daten (152), die zusammen mit der ersten Präambel (130_1) empfangen oder aus dem Zwischenspeicher extrahiert werden, Informationen bezüglich des Frequenzsprungmusters (140) und/oder Zeitsprungmusters (140) enthalten;
wobei der Datenempfänger (110) ausgebildet ist, um die Daten (120) unter Verwendung der Information bezüglich des Frequenzsprungmusters (140) und/oder Zeitsprungmusters (140) zu empfangen oder aus dem Zwischenspeicher zu extrahieren.

14. System, mit folgenden Merkmalen:
einem Datensender (100) nach einem der Ansprüche 1 bis 9; und
einem Datenempfänger (110) nach einem der Ansprüche 10 bis 13.

15. Verfahren (200) zum Senden von Daten, mit folgendem Schritt:
Senden eines Referenzsignals;
Senden (202) von Daten unter Verwendung eines Frequenzsprungmusters und/oder Zeitsprungmusters zeitlich synchronisiert zu dem Referenzsignal;
wobei das Referenzsignal zumindest zwei Präambeln umfasst,
wobei eine erste Präambel der zumindest zwei Präambeln am Stück bei einer Frequenz übertragen wird;
wobei die erste Präambel so ausgesendet wird, dass diese empfängerseitig für eine vollständige Detektion geeignet ist;
wobei die Daten zumindest zwei Datenpakete umfassen, wobei bei dem Senden (202) die zumindest zwei Datenpakete entsprechend des Frequenzsprungmusters und/oder Zeitsprungmusters ausgesendet werden;
wobei die Daten ein Telegramm sind, wobei das Telegramm auf die zumindest zwei Datenpakete aufgeteilt ist, wobei jedes der zumindest zwei Datenpakete kürzer ist als das Telegramm;
wobei die zweite Präambel der zumindest zwei Präambeln in zumindest zwei Teilpräambeln aufgeteilt und die zumindest zwei Teilpräambeln zeitlich und/oder frequenzmäßig voneinander beabstandet ausgesendet werden;
wobei die zumindest zwei Datenpakete mit den zumindest zwei Teilpräambeln versehen sind,
wobei die zumindest zwei Teilpräambeln jeweils kürzer sind als die erste Präambel.

16. Verfahren (210) zum Empfangen von Daten, mit folgendem Schritt:
Empfangen (212) von Daten unter Verwendung eines Frequenzsprungmusters und/oder Zeitsprungmusters zeitlich synchronisiert zu einem Referenzsignal;
wobei das Referenzsignal (130) zumindest zwei Präambeln umfasst,
wobei eine erste Präambel der zumindest zwei Präambeln am Stück bei einer Frequenz übertragen wird;
wobei die Daten zumindest zwei Datenpakete umfassen, wobei bei dem Empfangen (212) die zumindest zwei Datenpakete entsprechend des Frequenzsprungmusters und/oder Zeitsprungmusters empfangen oder aus dem Zwischenspeicher extrahiert werden,
wobei die Daten ein Telegramm sind, das in die zumindest zwei Datenpakete aufgeteilt ist, wobei jedes der zumindest zwei Datenpakete kürzer ist als das Telegramm;
Kombinieren der zumindest zwei Datenpakete, um das Telegramm zu erhalten;
wobei eine zweite Präambel der zumindest zwei Präambeln in zumindest zwei Teilpräambeln aufgeteilt ist und die zumindest zwei Teilpräambeln zeitlich und/oder frequenzmäßig voneinander beabstandet übertragen werden,
wobei die zumindest zwei Datenpakete mit den zumindest zwei Teilpräambeln versehen sind,
wobei die zumindest zwei Teilpräambeln jeweils kürzer sind als die erste Präambel.

17. Computerprogramm zur Durchführung des Verfahrens nach einem der Ansprüche 15 bis 16, wenn das Computerprogramm auf einem Computer oder Mikroprozessor abläuft.

## Claims

1. Data transmitter (100) configured to send out data (120) in a manner that is time-synchronized with a reference signal (130) while using a frequency hopping pattern (140) and/or time hopping pattern (140);
wherein the data transmitter (100) is configured to send out the reference signal (130) itself;
wherein the reference signal (130) includes at least two preambles (130_1:130_3),
wherein a first preamble (130_1) of the at least two preambles (130_1:130_3) is transmitted en bloc at one frequency;
wherein data transmitter (100) is configured to send out the first preamble (130_1) such that same will be suitable, on the receiver side, for complete detection;
wherein the data (120) comprises at least two data packets (142;144), the data transmitter (100) being configured to send out the at least two data packets (142;144) in accordance with the frequency hopping pattern (140) and time hopping pattern (140);
wherein the data (120) is a telegram, the data transmitter (100) being configured to split up the telegram into the at least two data packets (142;144), each of said at least two data packets (142;144) being shorter than the telegram;
wherein the data transmitter (100) is configured to split up a second preamble (130_2) of the at least two preambles (130_1:130_3) into at least two partial preambles/partial preambles and to send out the at least two partial preambles in a manner that is spaced apart in time and/or frequency;
wherein the data transmitter (100) is configured to provide the at least two data packets (142;144) with the at least two partial preambles,
wherein each of the at least two partial preambles is shorter than the first preamble (130_1).

2. Data transmitter (100) as claimed in claim 1, the data transmitter (100) being configured to transmit further data en bloc along with the first preamble (130_1).

3. Data transmitter (100) as claimed in any of the previous claims, wherein the data (120) contains preamble symbols.

4. Data transmitter (100) as claimed in any of the previous claims, the data transmitter (100) further being configured to send out the data (120) in a manner that is frequency-synchronized with the reference signal (130) while using the frequency hopping pattern (140) and/or time hopping pattern (140).

5. Data transmitter (100) as claimed in any of the previous claims, the data transmitter (100) being configured to send out the first preamble (130_1) before the data (120).

6. Data transmitter (100) as claimed in any of the previous claims, the data transmitter (100) being configured to send out the first preamble (130_1) at a data rate lower than that used for the data (120).

7. Data transmitter (100) as claimed in any of the previous claims, the data transmitter (100) being configured to send out the first preamble (130_1) with a modulation type or a modulation method different than those used for the data (120).

8. Data transmitter (100) as claimed in any of the previous claims, the data transmitter (100) being configured to transmit further data (152) along with the first preamble (130_1).

9. Data transmitter (100) as claimed in claim 8, wherein at least a portion of the further data (152) transmitted with the first preamble (130_1) contains information regarding the frequency hopping pattern (140) and time hopping pattern (140) of the data (120).

10. Data receiver (110) configured to receive data (120), or extract it from a buffer, while using a frequency hopping pattern (140) and time hopping pattern (140) in a manner that is time-synchronized with a reference signal (130);
wherein the reference signal (130) includes at least two preambles (130_1:130_3),
wherein the first preamble (130_1) of the at least two preambles (130_1:103_3) is transmitted en bloc at one frequency,
wherein the data (120) includes at least two data packets (142;144), the data receiver (110) being configured to receive the at least two data packets (142;144), or extract them from the buffer, in accordance with the frequency hopping pattern (140) and time hopping pattern (140),
wherein the data (120) is a telegram split up into the at least two data packets (142;144), each of the at least two data packets being shorter than the telegram;
wherein the data receiver (110) is configured to combine the at least two data packets (142;144) to obtain the telegram;
wherein a second preamble of the at least two preambles (130_1:130_3) is split up into at least two partial preambles and the at least two partial preambles are transmitted in a manner that is spaced apart in time and/or frequency,
wherein the at least two data packets (142;144) are provided with the at least two partial preambles,
wherein each of the at least two partial preambles is shorter than the first preamble (130_1).

11. Data receiver (110) as claimed in claim 10, the data receiver (110) further being configured to receive the data (120), or extract it from the buffer, while using the frequency hopping pattern (140) and time hopping pattern (140) in a manner that is frequency-synchronized with the reference signal (130).

12. Data receiver (110) as claimed in any of claims 10 to 11, wherein the first preamble (130_1) is received or extracted from the buffer along with further data (152).

13. Data receiver (110) as claimed in claim 12, wherein the further data (152) that is received or extracted from the buffer along with the first preamble (130_1) contains information regarding the frequency hopping pattern (140) and/or time hopping pattern (140);
the data receiver (110) being configured to receive the data (120), or to extract it from the buffer, while using the information regarding the frequency hopping pattern (140) and/or time hopping pattern (140).

14. System comprising:
a data transmitter (100) as claimed in any of claims 1 to 9; and
a data receiver (110) as claimed in any of claims 10 to 13.

15. Method (200) of sending data, comprising:
sending a reference signal;
sending (202) data while using a frequency hopping pattern and/or time hopping pattern in a manner that is time-synchronized with a reference signal;
wherein the reference signal includes at least two preambles,
wherein a first preamble of the at least two preambles is transmitted en bloc at one frequency;
wherein the first preamble is sent out such that same will be suitable, on the receiver side, for complete detection;
wherein the data comprises at least two data packets, wherein, while sending (202), the at least two data packets are sent out in accordance with the frequency hopping pattern and/or time hop-ping pattern;
wherein the data is a telegram, the telegram being split up into the at least two data packets, each of said at least two data packets being shorter than the telegram;
wherein the second preamble of the at least two preambles is split up into at least two partial preambles and the at least two partial preambles are sent out in a manner that is spaced apart in time and/or frequency;
wherein the at least two data packets are provided with the at least two partial preambles,
wherein each of the at least two partial preambles is shorter than the first preamble.

16. Method (210) of receiving data, comprising:
receiving (212) data while using a frequency hopping pattern and/or time hopping pattern in a manner that is time-synchronized with a reference signal;
wherein the reference signal (130) includes at least two preambles,
wherein a first preamble of the at least two preambles is transmitted en bloc at one frequency;
wherein the data comprises at least two data packets, wherein, while receiving (212), the at least two data packets are received or extracted in accordance with the frequency hopping pattern and/or time hop-ping pattern;
wherein the data is a telegram, the telegram being split up into the at least two data packets, each of said at least two data packets being shorter than the telegram;
combining the at least two data packets to obtain the telegram;
wherein a second preamble of the at least two preambles is split up into at least two partial preambles, and the at least two partial preambles are transmitted in a manner that is spaced apart in time and/or frequency;
wherein the at least two data packets are provided with the at least two partial preambles,
wherein each of the at least two partial preambles is shorter than the first preamble.

17. Computer program for performing the method as claimed in any of claims 15 to 16, when running on a computer or a microprocessor.

## Revendications

1. Émetteur de données (100) conçu pour émettre des données (120) en utilisant un motif de saut de fréquence (140) et/ou un motif de saut temporel (140), de manière synchronisée dans le temps par rapport à un signal de référence (130) ;
l'émetteur de données (100) étant conçu pour émettre lui-même le signal de référence (130),
le signal de référence (130) comprenant au moins deux préambules (130_1:130_3),
un premier préambule (130_1) parmi les au moins deux préambules (130_1:130_3) étant transmis en une seule fois à une fréquence ;
l'émetteur de données (100) étant conçu pour émettre le premier préambule (130_1) de manière à ce que celui-ci soit apte à une détection complète côté récepteur ;
les données (120) comprenant au moins deux paquets de données (142 ; 144), l'émetteur de données (100) étant conçu pour émettre les au moins deux paquets de données (142 ; 144) conformément au motif de saut de fréquence (140) et au motif de saut temporel (140) ;
les données (120) étant un télégramme, l'émetteur de données (100) étant conçu pour diviser le télégramme en au moins deux paquets de données (142 ; 144), chacun des au moins deux paquets de données (142 ; 144) étant plus court que le télégramme ;
l'émetteur de données (100) étant conçu pour diviser un deuxième préambule (130_2) parmi les au moins deux préambules (130_1:130_3) en au moins deux préambules partiels et pour émettre lesdits au moins deux préambules partiels à intervalles de temps et/ou de fréquence espacés les uns des autres ;
l'émetteur de données (100) étant conçu pour pourvoir les au moins deux paquets de données (142 ; 144) desdits au moins deux préambules partiels,
lesdits au moins deux préambules partiels étant chacun plus courts que le premier préambule (130_1).

2. Émetteur de données (100) selon la revendication 1, l'émetteur de données (100) étant conçu pour transmettre d'autres données conjointement avec le premier préambule (130_1) d'une traite.

3. Émetteur de données (100) selon l'une des revendications précédentes, dans lequel les données (120) contiennent des symboles de préambule.

4. Émetteur de données (100) selon l'une des revendications précédentes, l'émetteur de données (100) étant en outre conçu pour émettre les données (120) en utilisant le motif de saut de fréquence (140) et le motif de saut temporel (140) de manière synchronisée en fréquence avec le signal de référence (130).

5. Émetteur de données (100) selon l'une des revendications précédentes, l'émetteur de données (100) étant conçu pour émettre le premier préambule (130_1) avant les données (120).

6. Émetteur de données (100) selon l'une des revendications précédentes, l'émetteur de données (100) étant conçu pour émettre le premier préambule (130_1) à un débit de données inférieur à celui des données (120).

7. Émetteur de données (100) selon l'une des revendications précédentes, l'émetteur de données (100) étant conçu pour émettre le premier préambule (130_1) avec un autre type de modulation ou un autre procédé de modulation que les données (120).

8. Émetteur de données (100) selon l'une des revendications précédentes, l'émetteur de données (100) étant conçu pour transmettre d'autres données (152) conjointement avec le premier préambule (130_1).

9. Émetteur de données (100) selon la revendication 8, dans lequel au moins une partie des autres données (152) transmises avec le premier préambule (130_1) contient des informations concernant le motif de saut de fréquence (140) et le motif de saut temporel (140) des données (120).

10. Récepteur de données (110) conçu pour recevoir ou extraire d'une mémoire tampon des données (120) en utilisant un motif de saut de fréquence (140) et un motif de saut temporel (140), de manière synchronisée dans le temps par rapport à un signal de référence (130) ;
le signal de référence (130) comprenant au moins deux préambules (130_1:130_3),
un premier préambule (130_1) parmi les au moins deux préambules (130_1:130_3) étant transmis en une seule fois à une fréquence,
les données (120) comprenant au moins deux paquets de données (142 ; 144), le récepteur de données (110) étant conçu pour recevoir lesdits au moins deux paquets de données (142 ; 144) conformément au motif de saut de fréquence (140) et au motif de saut temporel (140), ou pour les extraire de la mémoire tampon,
les données (120) étant un télégramme divisé en au moins deux paquets de données (142 ; 144), chacun des au moins deux paquets de données étant plus court que le télégramme ;
le récepteur de données (110) étant conçu pour combiner lesdits au moins deux paquets de données (142 ; 144) afin d'obtenir le télégramme ;
un deuxième préambule parmi les au moins deux préambules (130_1:130_3) étant divisé en au moins deux préambules partiels, et lesdits au moins deux préambules partiels étant transmis à intervalles de temps et/ou de fréquence espacés les uns des autres,
lesdits au moins deux paquets de données (142 ; 144) étant pourvus desdits au moins deux préambules partiels,
lesdits au moins deux préambules partiels étant chacun plus courts que le premier préambule (130_1).

11. Récepteur de données (110) selon la revendication 10, le récepteur de données (110) étant en outre conçu pour recevoir les données (120) en utilisant le motif de saut de fréquence (140) et le motif de saut temporel (140) de manière synchronisée en fréquence avec le signal de référence (130), ou pour les extraire de la mémoire tampon.

12. Récepteur de données (110) selon l'une des revendications 10 à 11, dans lequel le premier préambule (130_1) est reçu, avec d'autres données (152), ou est extrait de la mémoire tampon.

13. Récepteur de données (110) selon la revendication 12, dans lequel les autres données (152) reçues ou extraites de la mémoire tampon avec le premier préambule (130_1) contiennent des informations relatives au motif de saut de fréquence (140) et/ou au motif de saut temporel (140) ;
le récepteur de données (110) étant conçu pour recevoir les données (120) en utilisant les informations relatives au motif de saut de fréquence (140) et/ou au motif de saut temporel (140), ou pour les extraire de la mémoire tampon.

14. Système comprenant les caractéristiques suivantes :
un émetteur de données (100) selon l'une des revendications 1 à 9 ; et
un récepteur de données (110) selon l'une des revendications 10 à 13.

15. Procédé (200) pour envoyer des données, comprenant l'étape suivante :
Envoi d'un signal de référence ;
Envoi (202) de données en utilisant un motif de saut de fréquence et/ou un motif de saut temporel synchronisé dans le temps avec le signal de référence ;
le signal de référence comprenant au moins deux préambules,
un premier préambule parmi les au moins deux préambules étant transmis en une seule fois à une fréquence ;
le premier préambule étant émis de manière à être apte à une détection complète côté récepteur ;
les données comprenant au moins deux paquets de données, lors de l'envoi (202), les au moins deux paquets de données étant émis conformément au motif de saut de fréquence et/ou au motif de saut temporel ;
les données étant un télégramme, le télégramme étant divisé en au moins deux paquets de données, chacun des au moins deux paquets de données étant plus court que le télégramme ;
le deuxième préambule parmi les au moins deux préambules étant divisé en au moins deux préambules partiels et les au moins deux préambules partiels étant émis à intervalles de temps et/ou de fréquence espacés les uns des autres ;
les au moins deux paquets de données étant pourvus des au moins deux préambules partiels,
les au moins deux préambules partiels étant chacun plus courts que le premier préambule.

16. Procédé (210) de réception de données, comprenant l'étape suivante :
Réception (212) de données au moyen d'un motif de saut de fréquence et/ou d'un motif de saut temporel synchronisé dans le temps avec un signal de référence ;
le signal de référence (130) comprenant au moins deux préambules,
un premier préambule parmi les au moins deux préambules étant transmis en une seule fois à une fréquence ;
les données comprenant au moins deux paquets de données, lors de la réception (212), les au moins deux paquets de données étant reçus ou extraits de la mémoire tampon conformément au motif de saut de fréquence et/ou au motif de saut temporel,
les données étant un télégramme divisé en au moins deux paquets de données, chacun des au moins deux paquets de données étant plus court que le télégramme ;
Combinaison des au moins deux paquets de données afin d'obtenir le télégramme ;
un deuxième préambule parmi les au moins deux préambules étant divisé en au moins deux préambules partiels, et les au moins deux préambules partiels étant transmis à intervalles de temps et/ou de fréquence espacés les uns des autres,
les au moins deux paquets de données étant pourvus des au moins deux préambules partiels,
les au moins deux préambules partiels étant chacun plus courts que le premier préambule.

17. Programme informatique pour la mise en œuvre du procédé selon l'une des revendications 15 à 16, lorsque ledit programme informatique est exécuté sur un ordinateur ou un microprocesseur.
